# EUROPEAN PATENT SPECIFICATION

(11) **EP 3 826 214 B1**
(45) Date of publication and mention of the grant of the patent: **03.04.2024**
(21) Application number: 19846366.3
(22) Date of filing: 08.08.2019
(51) Int. Cl.: H04L 5/00, H04W 28/18

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 09.08.2018 CN 201810904923
(43) Date of publication of application: 26.05.2021
(73) Proprietor: HUAWEI TECHNOLOGIES CO., LTD., Shenzhen, Guangdong 518129 (CN)
(72) Inventor: WANG, Lei, Shenzhen, Guangdong 518129 (CN); CHEN, Yan, Shenzhen, Guangdong 518129 (CN); XU, Xiuqiang, Shenzhen, Guangdong 518129 (CN); WANG, Yi, Shenzhen, Guangdong 518129 (CN)
(74) Representative: Körber, Martin Hans
(86) International application number: PCT/CN2019/099804
(87) International publication number: WO 2020/030048

(56) References cited:
- WO-A1-2014/028690
- WO-A1-2018/077383
- CN-A- 107 105 496
- US-A1- 2015 098 400
- US-A1- 2015 237 589
- HUAWEI et al.: "Discussion on D-PUR configuration", 3GPP TSG-RAN WG2 Meeting #105bis R2-1903413, 12 April 2019 (2019-04-12), XP051692681,
- PANASONIC: "Summary ofTA related aspects", 3GPP TSG-RAN WG1 #93 Rl-1807700, 25 May 2018 (2018-05-25), XP051442725,

## Description

### TECHNICAL FIELD

This application relates to the field of communications technologies, and in particular, to a communication method and a communications apparatus.

### BACKGROUND

In a long term evolution (long term evolution, LTE) communications system, when user equipment performs uplink communication with a network device, the user equipment is in a synchronization state. In other words, when the user equipment maintains an uplink synchronization state with the network device, the user equipment may send an uplink service to the network device. A manner in which the user equipment maintains the uplink synchronization state is to adjust a sending occasion of an uplink signal by receiving a timing advance (timing advance, TA) command (command) of the network device. The network device may send the TA command to the user equipment in two manners: (1) The user equipment first sends a random access preamble (random access preamble) to the network device, and then the network device performs timing measurement based on the preamble, and feeds back a measurement result to the user equipment by using the TA command. (2) After the user equipment enters a radio resource control (radio resource control, RRC) connected state, the network device performs timing measurement based on the uplink signal (for example, a sounding reference signal (sounding reference signal, SRS) or a demodulation reference signal (demodulation reference signal, DMRS)) sent by the user equipment, and feeds back the TA command to the user equipment through a media access control (media access control, MAC) control element (control element, CE).

An advantage of synchronous transmission is that communication is highly reliable. However, there are two disadvantages of the synchronous transmission. 1. Transmission overheads are high. To maintain uplink synchronization, the user equipment needs to first send the preamble to perform initial synchronization, and maintains the synchronization state by signaling exchange. Therefore, when a small packet service is transmitted in this manner, the transmission overheads occupy a large ratio, and transmission efficiency is reduced. 2. A transmission latency is relatively high. The user equipment needs to first send the preamble, and then wait for the network device to feed back the TA to perform synchronization. Therefore, the transmission latency is relatively high, and this is not applicable to a low-latency scenario.

A new radio (new radio, NR) communications system is a new generation communications system, and covers three communications scenarios: enhanced mobile broadband (enhance mobile broadband, eMBB), ultra-reliable low-latency communication (ultra-reliable low-latency communication, uRLLC), and massive machine-type communications (massive machine-type communications, mMTC). The eMBB scenario requires a high throughput, the uRLLC scenario requires high reliability and a low latency, and the mMTC scenario emphasizes massive connections. Clearly, if the synchronous transmission is used in all the three communications scenarios, a communication requirement cannot be met in a portion of the scenarios. In the NR system, to resolve the foregoing problem in a synchronous transmission mode, a portion of user equipment may be allowed to perform non-synchronous uplink transmission (or referred to as asynchronous transmission). In other words, the user equipment may not have information about a valid uplink TA, or may directly send an uplink service to a network device.

For the asynchronous transmission, a technical framework of orthogonal frequency division multiplexing (orthogonal frequency division multiplexing, OFDM) is still used in the NR system, and a cyclic prefix is added before each symbol. If a timing offset (plus channel extension) of the asynchronous transmission is less than a length of the cyclic prefix, no intersymbol interference is introduced to the asynchronous transmission. If the timing offset of the asynchronous transmission is greater than the length of the cyclic prefix, the intersymbol interference is introduced, thereby reducing transmission reliability. In a scenario with a relatively large range of a cell, because an uplink timing offset is relatively large, an OFDM cyclic prefix cannot resolve a problem of the asynchronous transmission. In addition, two disadvantageous effects of the asynchronous transmission need to be further considered. (1) In the NR system, there is a configuration in which a plurality of users simultaneously perform transmission on a same time-frequency resource, for example, multi-user multiple-input multiple-output (multiple-input multiple-output, MIMO), or multi-user non-orthogonal multiple access (non-orthogonal multiple access, NOMA). For the network device, channels of the plurality of users are not aligned in terms of time, and this increases interference between the plurality of users. (2) The uplink timing offset also causes linear phase rotation in frequency domain (where a time domain latency is equivalent to frequency domain phase rotation). Consequently, accuracy of channel estimation decreases. Therefore, in the OFDM framework, the transmission reliability may be reduced in an existing sending manner.

WO 2018/077383 A1 discloses a node of a wireless communication network that receives a synchronization signal from a radio device. Based on the received synchronization signal, the node determines a time alignment configuration for uplink radio transmissions from the radio device to the wireless communication network. Based on the received synchronization signal, the node further determines Hybrid Automatic Repeat Request (HARQ) feedback information for at least one downlink radio transmission from the wireless communication network to the radio device. The node indicates the determined time alignment configuration to the radio device.

Based on this, in an uplink transmission process, how to balance transmission efficiency and transmission reliability is an urgent problem to be resolved currently.

### SUMMARY

This application provides a communication method and a communications apparatus, to balance transmission efficiency and transmission reliability in an uplink transmission process.

According to a first aspect, a communication method is provided. The method includes: transmitting uplink data by using a first transmission parameter set when a time interval from a current moment to a latest moment at which uplink timing information is received is less than or equal to a first time interval; or transmitting uplink data by using a second transmission parameter set when a time interval from a current moment to a latest moment at which uplink timing information is received is greater than the first time interval, where a transmission parameter included in the first transmission parameter set is different from that included in the second transmission parameter set. The transmitting uplink data by using a first transmission parameter set includes: transmitting the uplink data by using a quantity of first retransmissions; or the transmitting uplink data by using a second transmission parameter set includes: transmitting the uplink data by using a quantity of second retransmissions, where the quantity of the first retransmissions is less than the quantity of the second retransmissions.

In this aspect, different transmission parameter sets are used to transmit the uplink data at different time intervals based on the time interval from the current moment to the latest moment at which the uplink timing information is received, so that both transmission efficiency and transmission reliability can be balanced.

When the time interval from the current moment to the latest moment at which the uplink timing information is received is less than or equal to the first time interval, the uplink timing information may still be valid, and transmission may be performed by using a relatively small quantity of retransmissions or retransmission is not performed, so that transmission efficiency can be improved. When the time interval from the current moment to the latest moment at which the uplink timing information is received is greater than the first time interval, the uplink timing information is already invalid, and transmission is performed by using a relatively large quantity of retransmissions, so that transmission reliability can be improved.

With reference to the first aspect, in a first possible implementation, when the time interval from the current moment to the latest moment at which the uplink timing information is received is greater than a second time interval and is less than or equal to the first time interval, the first transmission parameter set is used to transmit the uplink data, and the second time interval is less than the first time interval; and the method further includes: transmitting the uplink data by using a third transmission parameter set when the time interval from the current moment to the latest moment at which the uplink timing information is received is less than or equal to the second time interval, where a transmission parameter included in the third transmission parameter set is different from that included in the first transmission parameter set, and the transmission parameter included in the third transmission parameter set is different from that included in the second transmission parameter set.

In this implementation, different transmission parameters are used at different time intervals, so that both transmission efficiency and transmission reliability can be balanced.

With reference to the first possible implementation of the first aspect, in a second possible implementation, the transmitting the uplink data by using a third transmission parameter set includes: transmitting the uplink data based on a quantity of third retransmissions, where the quantity of the third retransmissions is less than the quantity of the first retransmissions.

With reference to the first aspect or the first possible implementation of the first aspect or the second possible implementation of the first aspect, in a third possible implementation, the transmitting uplink data by using a first transmission parameter set includes: transmitting the uplink data based on a first frame format, where the first frame format does not include a preamble; or the transmitting uplink data by using a second transmission parameter set includes: transmitting the uplink data based on a second frame format, where the second frame format includes a preamble.

In this implementation, when the time interval from the current moment to the latest moment at which the uplink timing information is received is less than or equal to the first time interval, the uplink timing information may be still valid, and only data is sent but the preamble is not sent. Therefore, a network device can still correctly demodulate the data, so that transmission efficiency can be improved. When the time interval from the current moment to the latest moment at which the uplink timing information is received is greater than the first time interval, the uplink timing information is already invalid, and the preamble is sent while the data is sent. This can improve data demodulation reliability, thereby improving transmission reliability.

With reference to the first aspect or the first possible implementation of the first aspect or the second possible implementation of the first aspect or the third possible implementation of the first aspect, in a fourth possible implementation, the transmitting uplink data by using a first transmission parameter set includes: transmitting the uplink data based on a first transport block size; or the transmitting uplink data by using a second transmission parameter set includes: transmitting the uplink data based on a second transport block size, where the second transport block size is smaller than the first transport block size.

In this implementation, when the time interval from the current moment to the latest moment at which the uplink timing information is received is less than or equal to the first time interval, the uplink timing information may still be valid, and data is transmitted by using a relatively large transport block size, so that transmission efficiency can be improved. When the time interval from the current moment to the latest moment at which the uplink timing information is received is greater than the first time interval, the uplink timing information is already invalid, and data is transmitted by using a relatively small transport block size. Therefore, an amount of the transmitted data is small, and a corresponding bit rate of channel coding is relatively low, so that transmission reliability can be improved.

According to a second aspect, a communications apparatus is provided, including: a transceiver unit, configured to transmit uplink data by using a first transmission parameter set when a time interval from a current moment to a latest moment at which uplink timing information is received is less than or equal to a first time interval, where the transceiver unit is further configured to transmit uplink data by using a second transmission parameter set when a time interval from a current moment to a latest moment at which uplink timing information is received is greater than the first time interval, where a transmission parameter comprised in the first transmission parameter set is different from that comprised in the second transmission parameter set, and where the transceiver unit is configured to transmit the uplink data by using a quantity of first retransmissions when the time interval from the current moment to the latest moment at which the uplink timing information is received is less than or equal to the first time interval; or the transceiver unit is further configured to transmit the uplink data by using a quantity of second retransmissions when the time interval from the current moment to the latest moment at which the uplink timing information is received is greater than the first time interval, where the quantity of the first retransmissions is less than the quantity of the second retransmissions.

With reference to the second aspect, in a first possible implementation, the transceiver unit is configured to transmit the uplink data by using the first transmission parameter set when the time interval from the current moment to the latest moment at which the uplink timing information is received is greater than a second time interval and is less than or equal to the first time interval, and the second time interval is less than the first time interval; or the transceiver unit is further configured to transmit the uplink data by using a third transmission parameter set when the time interval from the current moment to the latest moment at which the uplink timing information is received is less than or equal to the second time interval, where a transmission parameter comprised in the third transmission parameter set is different from that comprised in the first transmission parameter set, and the transmission parameter comprised in the third transmission parameter set is different from that comprised in the second transmission parameter set.

With reference to the first possible implementation of the second aspect, in a second possible implementation, the transceiver unit is configured to transmit the uplink data based on a quantity of third retransmissions when the time interval from the current moment to the latest moment at which the uplink timing information is received is less than or equal to the second time interval, where the quantity of the third retransmissions is less than the quantity of the first retransmissions.

With reference to the second aspect or the first possible implementation of the second aspect or the second possible implementation of the second aspect, in a third possible implementation, the transceiver unit is configured to transmit the uplink data based on a first frame format when the time interval from the current moment to the latest moment at which the uplink timing information is received is less than or equal to the first time interval, where the first frame format does not comprise a preamble; or the transceiver unit is configured to transmit the uplink data based on a second frame format when the time interval from the current moment to the latest moment at which the uplink timing information is received is greater than the first time interval, where the second frame format comprises a preamble.

With reference to the second aspect or the first possible implementation of the second aspect or the second possible implementation of the second aspect, or the third possible implementation of the second aspect, in a fourth possible implementation, the transceiver unit is configured to transmit the uplink data based on a first transport block size when the time interval from the current moment to the latest moment at which the uplink timing information is received is less than or equal to the first time interval; or the transceiver unit is configured to transmit the uplink data based on a second transport block size when the time interval from the current moment to the latest moment at which the uplink timing information is received is greater than the first time interval, where the second transport block size is smaller than the first transport block size.

According to a third aspect, a communications apparatus is provided, including: a transceiver unit, configured to receive uplink data from user equipment by using a first transmission parameter set when a time interval from a current moment to a latest moment at which uplink timing information is sent to the user equipment is less than or equal to a first time interval, where the transceiver unit is further configured to receive uplink data from user equipment by using a second transmission parameter set when a time interval from a current moment to a latest moment at which uplink timing information is sent to the user equipment is greater than the first time interval, where a transmission parameter comprised in the first transmission parameter set is different from that comprised in the second transmission parameter set, and where the transceiver unit is configured to receive the uplink data from the user equipment based on a quantity of first retransmissions when the time interval from the current moment to the latest moment at which the uplink timing information is sent to the user equipment is less than or equal to the first time interval; or the transceiver unit is further configured to receive the uplink data from the user equipment based on a quantity of second retransmissions when the time interval from the current moment to the latest moment at which the uplink timing information is sent to the user equipment is greater than the first time interval, where the quantity of the first retransmissions is less than the quantity of the second retransmissions..

With reference to the third aspect, in a first possible implementation, the transceiver unit is configured to receive the uplink data from the user equipment by using the first transmission parameter set when the time interval from the current moment to the latest moment at which the uplink timing information is sent to the user equipment is greater than a second time interval and is less than the first time interval, and the second time interval is less than the first time interval; or the transceiver unit is further configured to receive the uplink data from the user equipment by using a third transmission parameter set when the time interval from the current moment to the latest moment at which the uplink timing information is sent to the user equipment is less than or equal to the second time interval, where a transmission parameter comprised in the third transmission parameter set is different from that comprised in the first transmission parameter set, and the transmission parameter comprised in the third transmission parameter set is different from that comprised in the second transmission parameter set.

According to a seventh aspect, a communications system is provided, including the foregoing communications apparatuses.

### BRIEF DESCRIPTION OF DRAWINGS

To describe the technical solutions in the embodiments of the present invention or in the background more clearly, the following describes the accompanying drawings in the embodiments of the present invention or the background.
FIG. 1 is a schematic diagram of a communications system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic diagram of an example of a type of uplink transmission;
FIG. 5 is a schematic flowchart of still another communication method according to an embodiment of this application;
FIG. 6 is a schematic diagram of an example of another type of uplink transmission;
FIG. 7 is a schematic flowchart of still another communication method according to an embodiment of this application;
FIG. 8 is a schematic diagram of an example of still another type of uplink transmission;
FIG. 9 is a schematic flowchart of still another communication method according to an embodiment of this application;
FIG. 10a is a schematic diagram of an example of still another type of uplink transmission;
FIG. 10b is a schematic diagram of an example of still another type of uplink transmission;
FIG. 11 is a schematic structural diagram of a communications apparatus according to an embodiment of this application;
FIG. 12 is a schematic structural diagram of another communications apparatus according to an embodiment of this application;
FIG. 13 is a schematic structural diagram of still another communications apparatus according to an embodiment of this application; and
FIG. 14 is a schematic structural diagram of still another communications apparatus according to an embodiment of this application.

### DESCRIPTION OF EMBODIMENTS

The following describes embodiments of the present invention with reference to accompanying drawings in the embodiments of the present invention.

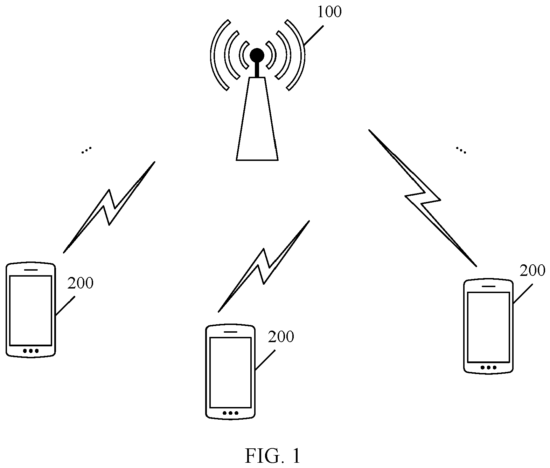

FIG. 1 is a schematic diagram of a communications system according to an embodiment of this application. The communications system may include at least one network device 100 (only one is shown) and one or more user equipments 200 connected to the network device 100.

The network device 100 may be a device that can communicate with the user equipment (user equipment, UE) 200. The network device 100 may be any device having a wireless transceiver function, and includes but is not limited to a NodeB, an evolved NodeB eNodeB, a base station in a fifth generation (the fifth generation, 5G) communications system, a base station or a network device in a future communications system, an access node in a wireless fidelity (wireless-fidelity, Wi-Fi) system, a wireless relay node, a wireless backhaul node, or the like. Alternatively, the network device 100 may be a radio controller in a cloud radio access network (cloud radio access network, CRAN) scenario. Alternatively, the network device 100 may be a small cell, a transmission reference point (transmission reference point, TRP), or the like. A specific technology and a specific device form that are used by the network device are not limited in the embodiments of this application.

The user equipment 200 is a device having a wireless transceiver function, and may be deployed on land, where the deployment includes indoor or outdoor, handheld, wearable, or vehicle-mounted deployment, may be deployed on water, for example, on a ship, or may be deployed in air, for example, on an aerocraft, a balloon, and a satellite. The user equipment may be a mobile phone (mobile phone), a tablet computer (pad), a computer with a wireless transceiver function, virtual reality (virtual reality, VR) user equipment, augmented reality (augmented reality, AR) user equipment, a wireless terminal in an industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. Sometimes, the user equipment may also be referred to as a terminal device, access user equipment, a UE unit, a mobile station, a mobile station, a remote station, remote user equipment, a mobile device, a terminal (terminal), a wireless communications device, a UE agent, a UE apparatus, or the like.

It should be noted that, terms "system" and "network" in the embodiments of the present invention may be used interchangeably. "A plurality of" means two or more. In view of this, "a plurality of" may also be understood as "at least two" in the embodiments of the present invention. "And/or" describes an association relationship between associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

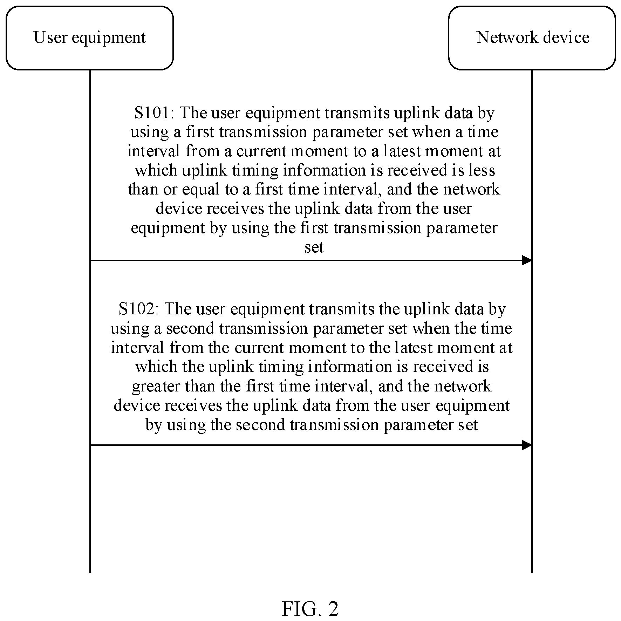

FIG. 2 is a schematic flowchart of a communication method according to an embodiment of this application. Steps are as follows.

S101: User equipment transmits uplink data by using a first transmission parameter set when a time interval from a current moment to a latest moment at which uplink timing information is received is less than or equal to a first time interval.

Correspondingly, a network device receives the uplink data from the user equipment by using the first transmission parameter set when a time interval from the current moment to a latest moment at which the uplink timing information is sent to the user equipment is less than or equal to the first time interval.

In this embodiment, it is assumed that the user equipment receives, at some moments, the uplink timing information (for example, a TA command) fed back by the network device. For example, for an LTE system, the network device feeds back the uplink timing information to the user equipment in two manners: (1) After receiving a preamble, the network device feeds back the uplink timing information to the user equipment by using a random access response (random access response, RAR). (2) The network device may alternatively feed back the uplink timing information to the user equipment through a MAC CE.

The uplink timing information sent by the network device has time validity. As time passes by, the uplink timing information gradually becomes invalid (for example, moving of the user equipment, a change in a channel environment, or an offset of a crystal oscillator of the user equipment causes the uplink timing information to gradually become invalid). Therefore, it may be approximately considered that a longer time from a moment at which the uplink timing information is delivered indicates a severer time offset of uplink transmission of the user equipment, namely, lower reliability of the uplink transmission of the user equipment.

In this embodiment, the user equipment selects different transmission parameter sets based on a time interval from a current moment at which one uplink transmission is performed to a latest moment at which the uplink timing information is set or updated. The current moment is a moment at which the user equipment starts to transmit the uplink data by using the transmission parameter set, and may also be referred to as a start moment at which the uplink data is transmitted.

In existing LTE and NR communications systems, most uplink transmission parameters of the user equipment are configured by the network device. However, in this application, the user equipment adjusts the uplink transmission parameter set based on time validity of the current uplink timing information. Transmission efficiency is improved when the uplink timing information is relatively accurate, and transmission reliability is improved when the uplink timing information is inaccurate.

The user equipment and the network device agree on a plurality of sets of uplink transmission parameters in advance. Each set of uplink transmission parameters corresponds to different transmission reliability and transmission efficiency. Before transmitting an uplink service, the user equipment first determines the time interval from the current moment to the latest moment at which the uplink timing information is received. The user equipment selects different transmission parameter sets based on different time intervals. A parameter selection rule may be agreed on by the user equipment and the network device in advance. To ensure the transmission reliability and balance the transmission efficiency, the selection rule is as follows: A longer time interval indicates that the user equipment selects a transmission parameter set with higher transmission reliability; and a shorter time interval indicates that the user equipment selects a transmission parameter set with higher transmission efficiency.

The transmission parameter set includes one or more uplink transmission parameters. Different transmission parameter sets may mean that types of uplink transmission parameters in the sets are different, or mean that parameter values of a portion of or all of the uplink transmission parameters in the sets are different, or mean that parameter values of a portion of the uplink transmission parameters are different and types of the included uplink transmission parameters are also different.

The uplink transmission parameter set may include one or more of the following uplink transmission parameters: a time frequency resource parameter, a quantity of retransmissions (or a minimum quantity of retransmissions), a transmission time interval bundling size (TTI Bundling size) (or a minimum quantity of times of TTI bundling), whether to send a preamble, a transport block size (transport block size, TBS), a modulation-related parameter (for example, a modulation and coding scheme (modulation and coding scheme, MCS) level or a modulation order), a non-orthogonal transmission parameter, a MIMO-related parameter (for example, a quantity of layers of MIMO), a pilot (for example, a DMRS) configuration parameter, or a power control parameter. Different values may be configured for the uplink transmission parameters based on different time intervals. For an example of a relationship between the uplink transmission parameters and the reliability and the transmission efficiency, refer to the following descriptions in Table 1.

**Table 1**

| | |
|---|---|
| Higher reliability | Higher transmission efficiency |
| Larger total quantity of time frequency resources | Smaller total quantity of the time frequency resources |
| Larger quantity of retransmissions (or larger quantity of minimum retransmissions) | Smaller quantity of the retransmissions (or smaller quantity of the minimum retransmissions) |
| Larger quantity of times of TTI bundling (or larger quantity of times of minimum TTI bundling) | Smaller quantity of the times of the TTI bundling (or smaller quantity of the times of the minimum TTI bundling) |
| Need to send a preamble | Do not send the preamble |
| Set a smaller transport block size | Set a larger transport block size |
| Sets a lower modulation order | Set a higher modulation order |
| Smaller quantity of layers of non-orthogonal transmission | Larger quantity of the layers of the non-orthogonal transmission |
| Smaller quantity of layers of MIMO transmission | Larger quantity of the layers of the MIMO transmission |
| Larger quantity of time frequency resources occupied by a pilot | Smaller quantity of the time frequency resources occupied by the pilot |
| Higher transmit power | Lower transmit power |

The plurality of sets of uplink transmission parameters are agreed on by the network device and the user equipment in advance. The selection rule of the plurality of sets of parameters may also be agreed on by the network device and the user equipment in advance. Both the preset uplink transmission parameters and the preset uplink parameter selection rules may be implemented in the following several manners: (1) preset by a system, where no signaling exchange is needed; (2) configured by the network device by using a broadcast message (for example, a system information block (system information block, SIB); (3) for the user equipment in a connected state, configured by the network device by using user-specific RRC signaling; and (4) for a user in a non-connected state, may be configured by the network device (for example, configured by using RRC connection release (RRC connection release) signaling) in signaling in which the user equipment is configured to enter the non-connected state.

It should be noted that there are length configurations of two types of cyclic prefixes (a normal cyclic prefix (normal CP) and an extended cyclic prefix (extended CP)) in the LTE system and the NR system. This embodiment may be used in configuration manners with the two types of CPs.

The foregoing time interval may be determined by setting one or more timers (timer). The user equipment sets the one or more timers when receiving the uplink timing information. The user equipment selects different transmission parameter sets based on whether the one or more timers expire. In this embodiment, one timer may be set when the user equipment receives the uplink timing information. Before the timer expires, it may be considered that the time interval from the current moment at which the user equipment transmits the uplink data to the latest moment at which the user equipment receives the uplink timing information is less than or equal to the first time interval. After the timer expires, it may be considered that the time interval from the current moment at which the user equipment transmits the uplink data to the latest moment at which the user equipment receives the uplink timing information is greater than the first time interval. Timing duration of the timer may be specified in a protocol, or may be configured by the network device for the user equipment (for example, configured by using RRC signaling).

Correspondingly, the network device may also set one or more timers after sending the uplink timing information. The network device selects different transmission parameter sets based on whether the one or more timers expire. Therefore, when data transmitted in uplink by a user is received, different receiving and decoding manners may also be used based on different time intervals, to reduce an effect from asynchronization.

Because the time interval from the current moment to the latest moment at which the user equipment receives the uplink timing information is less than or equal to the first time interval, and is not long from the moment at which the uplink timing information is delivered (where the uplink timing information is still valid or is just expired), a time offset of uplink transmission of the user equipment is relatively small, and reliability of the uplink data transmission is relatively high. Therefore, the user equipment may transmit the uplink data by using the first transmission parameter set, thereby improving data transmission efficiency. For example, the uplink transmission parameters in the table on the right of Table 1 are used.

S102: The user equipment transmits the uplink data by using a second transmission parameter set when the time interval from the current moment to the latest moment at which the uplink timing information is received is greater than the first time interval, where a transmission parameter included in the first transmission parameter set is different from that included in the second transmission parameter set.

Correspondingly, the network device receives the uplink data from the user equipment by using the second transmission parameter set when the time interval from the current moment to the latest moment at which the uplink timing information is sent to the user equipment is greater than the first time interval.

In this step, because the time interval from the current moment to the latest moment at which the uplink timing information is received is greater than the first time interval, and is relatively long from the moment at which the uplink timing information is delivered (the uplink timing information is invalid), the time offset of the uplink transmission of the user equipment is relatively large, and the user equipment may transmit the uplink data by using the second transmission parameter set, so that reliability of the uplink data transmission is improved. For example, the uplink transmission parameters in the table on the left of Table 1 are used.

According to the communication method provided in this embodiment of this application, different transmission parameter sets are used to transmit the uplink data at different time intervals based on the time interval from the current moment to the latest moment at which the uplink timing information is received, so that both transmission efficiency and transmission reliability can be balanced.

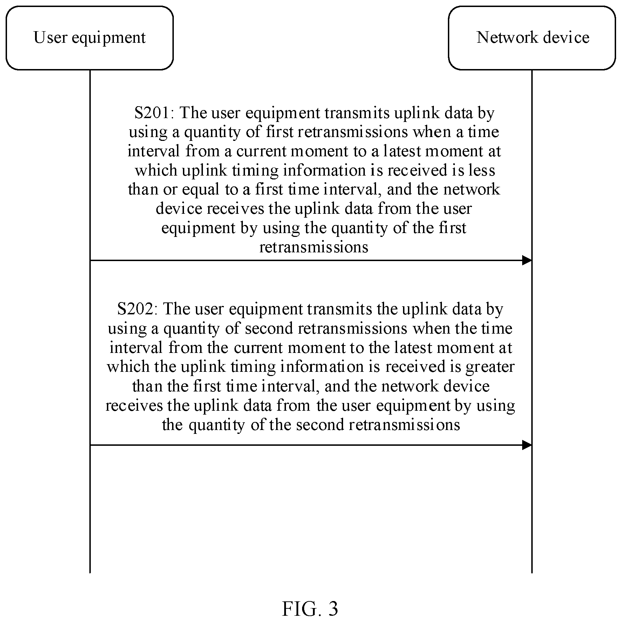

FIG. 3 is a schematic flowchart of another communication method according to an embodiment of this application. Steps are as follows.

S201: User equipment transmits uplink data by using a quantity of first retransmissions when a time interval from a current moment to a latest moment at which uplink timing information is received is less than or equal to a first time interval.

Correspondingly, a network device receives the uplink data from the user equipment by using the quantity of the first retransmissions when the time interval from the current moment to the latest moment at which the uplink timing information is received is less than or equal to the first time interval.

The user equipment starts one timer after receiving the uplink timing information. Before the timer expires, when the time interval from the moment at which the user equipment sends the uplink data to the latest moment at which the user equipment receives the uplink timing information is less than or equal to the first time interval, the user equipment may transmit the uplink data by using the quantity of the first retransmissions.

The quantity of the retransmissions may also be replaced with a TTI bundling size. In this embodiment, the two terms "TTI bundling "and "retransmission" are not distinguished. A common feature of the two terms "TTI bundling "and "retransmission" is that for a same transport block (transport block, TB), coding and modulation are first performed, and then resource mapping is performed. During resource mapping, resources are mapped to time frequency resources corresponding to a plurality of transmission time intervals (transmission time interval, TTI). The TTI is a time domain resource allocation unit. For example, the TTI may be one subframe, one slot, or a plurality of OFDM symbols. The time frequency resources in the plurality of TTIs may be adjacent or may not be adjacent.

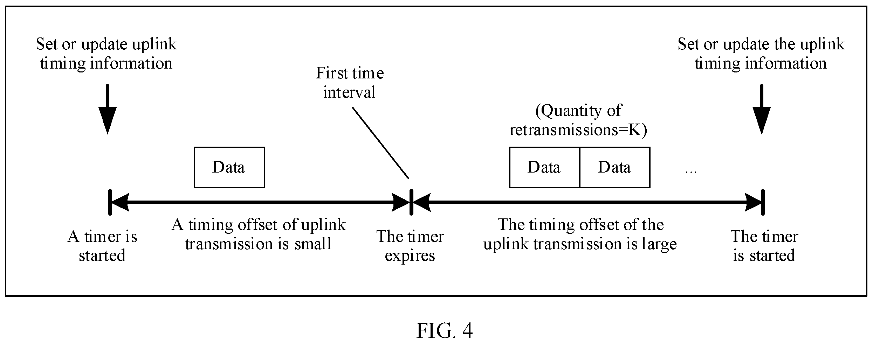

FIG. 4 is a schematic diagram of an example of one uplink transmission. When the time interval from the current moment to the latest moment at which the uplink timing information is received is less than or equal to the first time interval, that is, before the timer expires or when the timer expires, the quantity of the first retransmissions is 1, that is, the uplink data is transmitted only once. For example, the uplink data is transmitted only on a time frequency resource of one TTI, and retransmission is not performed. Certainly, the quantity of the first retransmissions may also be set to a relatively small value. If a quantity of retransmissions is not configured, there is only one transmission for to-be-transmitted uplink data (a data packet) by default. It should be noted that the quantity of the retransmissions may be understood as including a current transmission. For example, if the quantity of the first retransmissions is 1, the current transmission is included, and there is one transmission in addition to the current transmission for the to-be-transmitted uplink data (the data packet). This understanding is used in this embodiment. The quantity of the retransmissions may also be understood as only the quantity of the retransmissions, that is, the quantity of the retransmissions does not include the current transmission. For example, if the quantity of the retransmissions is 1, there is one retransmission in addition to the current transmission.

Because the time interval from the current moment to the latest moment at which the user equipment receives the uplink timing information is less than or equal to the first time interval, and is not long from the moment at which the uplink timing information is delivered (where the uplink timing information is still valid or is just expired), a time offset of uplink transmission of the user equipment is relatively small, reliability of the uplink data transmission is relatively high, and the user equipment may transmit the uplink data by using the quantity of the first retransmissions. In addition, when a first transmission parameter set is used for data transmission, retransmission is not needed, or the quantity of the retransmissions is relatively small. Therefore, data efficiency is relatively high.

S202: The user equipment transmits the uplink data by using a quantity of second retransmissions when the time interval from the current moment to the latest moment at which the uplink timing information is received is greater than the first time interval, where the quantity of the first retransmissions is less than the quantity of the second retransmissions.

Correspondingly, the network device receives the uplink data from the user equipment by using the quantity of the second retransmissions when the time interval from the current moment to the latest moment at which the uplink timing information is received is greater than the first time interval.

After the timer expires, the time interval from the moment at which the user equipment sends the uplink data to the latest moment at which the user equipment receives the uplink timing information is greater than the first time interval, and the user equipment may transmit the uplink data by using the quantity of the second retransmissions.

In this step, because the time interval from the current moment to the latest moment at which the uplink timing information is received is greater than the first time interval, and is relatively long from the moment at which the uplink timing information is delivered (the uplink timing information is invalid), the time offset of the uplink transmission of the user equipment is relatively large, and the user equipment may transmit the uplink data by using the quantity of the second retransmissions. The quantity of the second retransmissions is greater than the quantity of the first retransmissions. The uplink data transmission is performed by using the quantity of the second retransmissions, and reliability is relatively high.

As shown in FIG. 4, the quantity of the second retransmissions is K, K is a value greater than 1, and the quantity of the second retransmissions is greater than the quantity of the first retransmissions. In other words, when performing transmission, the user equipment performs K retransmissions, to improve transmission reliability.

The quantity of the retransmissions may be preset by a system, or may be configured by the network device through broadcasting, or may be configured by the network device by using RRC signaling or downlink control information (downlink control information, DCI) (where if the user equipment is in a non-connected state, the user equipment may be configured by the network device by using the RRC signaling or the DCI before the user equipment enters the non-connected state).

According to the communication method provided in this embodiment of this application, when the time interval from the current moment to the latest moment at which the uplink timing information is received is less than or equal to the first time interval, the uplink timing information may still be valid, and transmission may be performed by using a relatively small quantity of retransmissions or retransmission is not performed, so that transmission efficiency can be improved. When the time interval from the current moment to the latest moment at which the uplink timing information is received is greater than the first time interval, the uplink timing information is already invalid, and transmission is performed by using a relatively large quantity of retransmissions, so that transmission reliability can be improved.

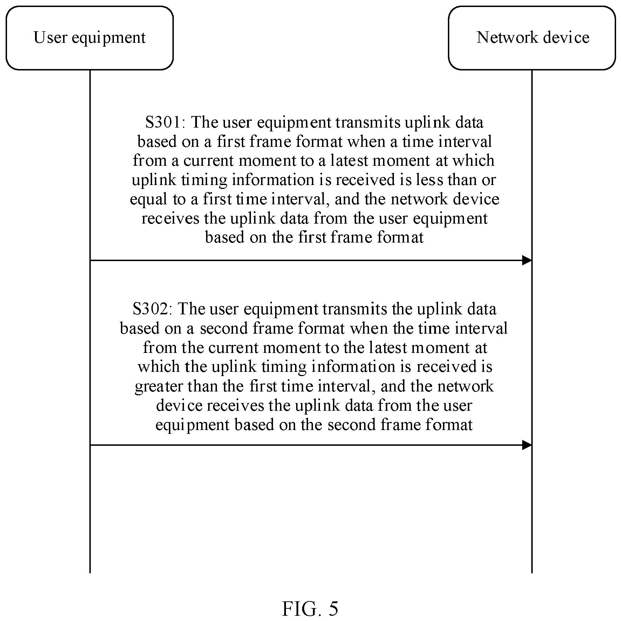

FIG. 5 is a schematic flowchart of still another communication method according to an embodiment of this application. Steps are as follows.

S301: User equipment transmits uplink data based on a first frame format when a time interval from a current moment to a latest moment at which uplink timing information is received is less than or equal to a first time interval, where the first frame format does not include a preamble.

Correspondingly, a network device receives the uplink data from the user equipment based on the first frame format when the time interval from the current moment to the latest moment at which the uplink timing information is received is less than or equal to the first time interval.

The user equipment starts one timer after receiving the uplink timing information. Before the timer expires, the time interval from the moment at which the user equipment sends the uplink data to the latest moment at which the user equipment receives the uplink timing information is less than or equal to the first time interval, and the user equipment may transmit the uplink data by using the first frame format. The first frame format does not include the preamble.

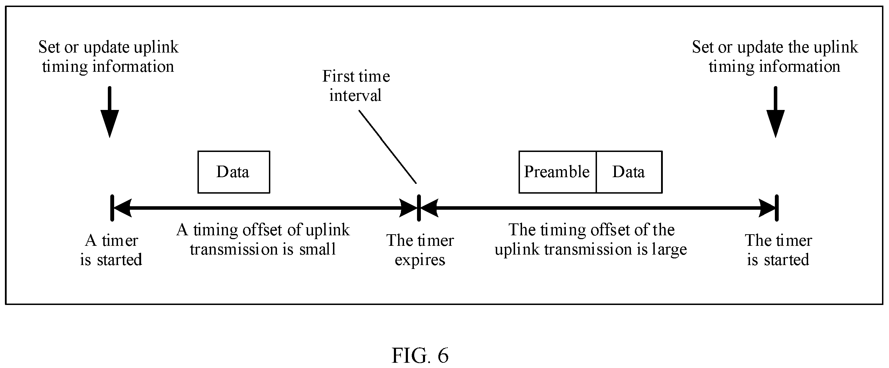

In an example of another uplink data transmission shown in FIG. 6, when the time interval from the current moment to the latest moment at which the uplink timing information is received is less than or equal to the first time interval, that is, before the timer expires or when the timer expires, the uplink data transmission does not include the preamble.

Because the time interval from the current moment to the latest moment at which the user equipment receives the uplink timing information is less than or equal to the first time interval, and is not long from the moment at which the uplink timing information is delivered (where the uplink timing information is still valid or is just expired), a time offset of uplink transmission of the user equipment is relatively small, reliability of the uplink data transmission is relatively high, and the user equipment may not send the preamble when transmitting the uplink data. When the first frame format is used for data transmission, the preamble does not need to be sent. Therefore, data transmission efficiency is relatively high.

S302: The user equipment transmits the uplink data based on a second frame format when the time interval from the current moment to the latest moment at which the uplink timing information is received is greater than the first time interval, where the second frame format includes a preamble.

Correspondingly, the network device receives the uplink data from the user equipment based on the second frame format when the time interval from the current moment to the latest moment at which the uplink timing information is received is greater than the first time interval.

After the timer expires, the time interval from the moment at which the user equipment sends the uplink data to the latest moment at which the user equipment receives the uplink timing information is greater than the first time interval. In addition to sending an uplink signal in a preset manner, the user equipment further sends one or more extra preambles. As shown in FIG. 6, after the timer expires, one preamble is sent at the same time when data is sent. The preamble may help the network device adjust a timing error of receiving the signal, to improve reliability of uplink transmission.

A time frequency resource used to transmit the preamble may be adjacent to or not adjacent to a time frequency resource used to transmit the uplink data. A time frequency resource occupied by the preamble may be the same as or different from a time frequency resource of a preamble that is already used by the user equipment for access in a system. A sequence set occupied by the preamble may be the same as or different from a preamble sequence set that is already used by the user equipment for access in the system.

In this step, because the time interval from the current moment to the latest moment at which the uplink timing information is received is greater than the first time interval, and is relatively long from the moment at which the uplink timing information is delivered (the uplink timing information is invalid), the time offset of the uplink transmission of the user equipment is relatively large, the user equipment may transmit the uplink data by using the second frame format, and the second frame format includes the preamble, so that transmission reliability is relatively high.

The frame format may be preset by a system, or may be configured by the network device through broadcasting, or may be configured by the network device by using RRC signaling or DCI (where if the user equipment is in a non-connected state, the user equipment may be configured by the network device by using the RRC signaling or the DCI before the user equipment enters the non-connected state).

In addition, a resource (a time domain resource, and/or a frequency domain resource, and/or a space domain resource) used by the user equipment to send the preamble or the data may be agreed on by the user equipment and the network device in advance, or may be higher layer signaling (for example, RRC signaling) or lower layer signaling (for example, a MAC CE or DCI) configured by the user equipment for the user equipment. If the resource of the preamble and the resource of the data are configured by the network device for the user equipment, the resource of the preamble and the resource of the data may be in a same piece of configuration information, or may be in different pieces of configuration information.

To reduce complexity of blind detection performed by the network device, there is a correspondence between the resource used by the user equipment to send the preamble and the resource used by the user equipment to send the data. In other words, the network device can learn, based on information about the resource on which the preamble is detected, resource information used by the user equipment to send the data. The resource information herein may include at least one of the following information: a resource position, a resource number (index), a resource size, a resource quantity, or the like.

The resource used by the user equipment to send the preamble and the resource used by the user equipment to send the data may be adjacent in time domain, or may not be adjacent in time domain; may be adjacent in frequency domain, or may not be adjacent in frequency domain; may be located on a same time domain resource, or may be located on different time domain resources; may be located on a same frequency domain resource, or may be located on different frequency domain resources; or may be located in a same spatial domain, or may be located in different spatial domains, namely, a beam.

The resource used by the user equipment to send the data may include a resource used to send a pilot (for example, a DMRS), and the pilot may be used for detection, channel estimation, or the like of the user equipment. It may be understood that in another embodiment of this application, the resource used to send the data may also include the resource used to send the pilot.

According to the communication method provided in this embodiment of this application, when the time interval from the current moment to the latest moment at which the uplink timing information is received is less than or equal to the first time interval, the uplink timing information may be still valid, and only the data is sent but the preamble is not sent. Therefore, the network device can still correctly demodulate the data, so that transmission efficiency can be improved. When the time interval from the current moment to the latest moment at which the uplink timing information is received is greater than the first time interval, the uplink timing information is already invalid, and the preamble is sent while the data is sent. This can improve data demodulation reliability, thereby improving transmission reliability.

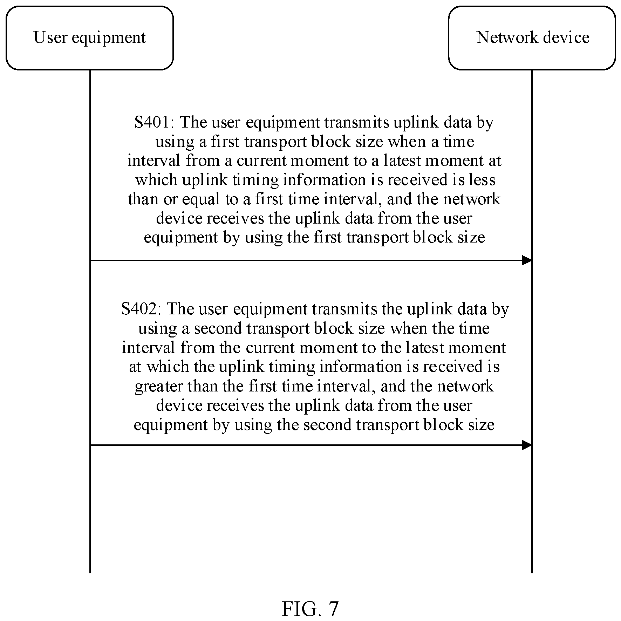

FIG. 7 is a schematic flowchart of still another communication method according to an embodiment of this application. Steps are as follows.

S401: User equipment transmits uplink data by using a first transport block size when a time interval from a current moment to a latest moment at which uplink timing information is received is less than or equal to a first time interval.

Correspondingly, a network device receives the uplink data from the user equipment by using the first transport block size when the time interval from the current moment to the latest moment at which the uplink timing information is received is less than or equal to the first time interval.

The user equipment starts one timer after receiving the uplink timing information. Before the timer expires, the time interval from the moment at which the user equipment sends the uplink data to the latest moment at which the user equipment receives the uplink timing information is less than or equal to the first time interval, the user equipment may transmit the uplink data by using the first transport block size, and the first transport block size may be set to a relatively large transport block size. On time frequency resources of a same size, a relatively large transport block size is used to transmit data, so that a relatively large amount of data can be transmitted.

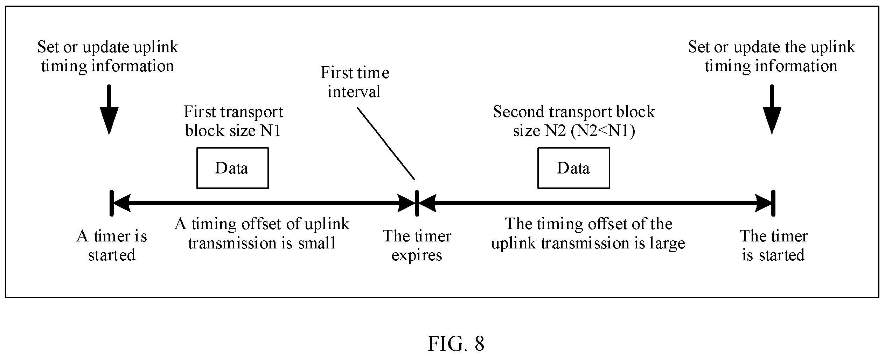

FIG. 8 is a schematic diagram of an example of still another uplink transmission. When a time interval from a current moment to a latest moment at which uplink timing information is received is less than or equal to a first time interval, that is, before a timer expires or when the timer expires, a first transport block size is N1.

Because the time interval from the current moment to the latest moment at which the user equipment receives the uplink timing information is less than or equal to the first time interval, and is not long from the moment at which the uplink timing information is delivered (the uplink timing information is still valid or is just expired), a time offset of uplink transmission of the user equipment is relatively small, reliability of uplink data transmission is relatively high, and the user equipment may transmit the uplink data by using the first transport block size. The first transport block size may be set to a relatively large transport block size, so that a relatively large amount of data can be transmitted. Therefore, data transmission efficiency is relatively high.

S402: The user equipment transmits the uplink data by using a second transport block size when the time interval from the current moment to the latest moment at which the uplink timing information is received is greater than the first time interval, where the second transport block size is smaller than the first transport block size.

Correspondingly, the network device receives the uplink data from the user equipment by using the second transport block size when the time interval from the current moment to the latest moment at which the uplink timing information is received is greater than the first time interval.

After the timer expires, the time interval from the moment at which the user equipment sends the uplink data to the latest moment at which the user equipment receives the uplink timing information is greater than the first time interval, and the user equipment may transmit the uplink data by using the second transport block size. The second transport block size is smaller than the first transport block size. That is, after the timer expires, the user equipment may transmit a relatively small amount of data. As shown in FIG. 8, after the timer expires, the second transport block size is N2, where N2<N1.

In this step, because the time interval from the current moment to the latest moment at which the uplink timing information is received is greater than the first time interval, and is relatively long from the moment at which the uplink timing information is delivered (the uplink timing information is invalid), the time offset of the uplink transmission of the user equipment is relatively large, and the user equipment may transmit the uplink data by using the second transport block size. The second transport block size is smaller than the first transport block size, so that channel coding may be performed on to-be-transmitted data by using a relatively low bit rate of the channel coding, thereby ensuring data transmission reliability.

The transport block size may be preset by a system, or may be configured by the network device through broadcasting, or may be configured by the network device by using RRC signaling or DCI (where if the user equipment is in a non-connected state, the user equipment may be configured by the network device by using the RRC signaling or the DCI before the user equipment enters the non-connected state).

According to the communication method provided in this embodiment of this application, when the time interval from the current moment to the latest moment at which the uplink timing information is received is less than or equal to the first time interval, the uplink timing information may still be valid, and data is transmitted by using a relatively large transport block size, so that transmission efficiency can be improved. When the time interval from the current moment to the latest moment at which the uplink timing information is received is greater than the first time interval, the uplink timing information is already invalid, and data is transmitted by using a relatively small transport block size, so that transmission reliability can be improved.

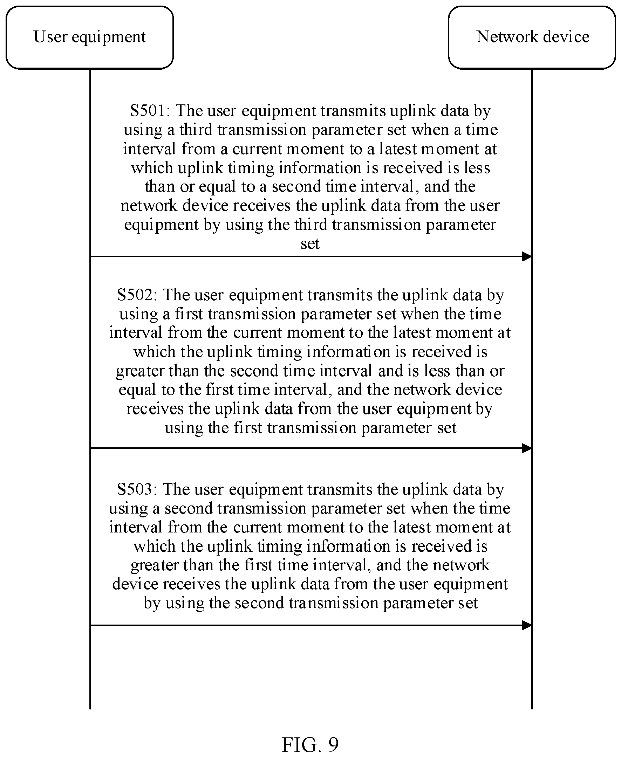

FIG. 9 is a schematic flowchart of still another communication method according to an embodiment of this application. Steps are as follows.

S501: User equipment transmits uplink data by using a third transmission parameter set when a time interval from a current moment to a latest moment at which uplink timing information is received is less than or equal to a second time interval.

Correspondingly, a network device receives the uplink data from the user equipment by using the third transmission parameter set when a time interval from the current moment to a latest moment at which the uplink timing information is sent to the user equipment is less than or equal to the second time interval.

After receiving the uplink timing information, the user equipment may start two timers: a timer 1 and a timer 2, and timeout duration of the timer 1 is less than that of the timer 2.

Before the timer 1 expires or when the timer 1 expires, in other words, when the time interval from the current moment at which the user equipment transmits the uplink data to the latest moment at which the user equipment receives the uplink timing information is less than or equal to the second time interval, the user equipment transmits the uplink data by using the third transmission parameter set. The third transmission parameter set may include one or more of the uplink transmission parameters in Table 1.

S502: The user equipment transmits the uplink data by using a first transmission parameter set when the time interval from the current moment to the latest moment at which the uplink timing information is received is greater than the second time interval and is less than or equal to the first time interval, where the second time interval is less than the first time interval.

Correspondingly, the network device receives the uplink data from the user equipment by using the first transmission parameter set when the time interval from the current moment to the latest moment at which the uplink timing information is received is greater than the second time interval and is less than the first time interval.

In a time period in which the timer 1 is already expired and the timer 2 is not yet expired, in other words, when the time interval from the current moment to the latest moment at which the uplink timing information is received is greater than a second time interval and is less than or equal to the first time interval, the user equipment transmits the uplink data by using the first transmission parameter set.

A transmission parameter included in the third transmission parameter set and a transmission parameter included in the first transmission parameter set are different. In other words, types of uplink transmission parameters in the third transmission parameter set and the first transmission parameter set may be different, or parameter values of a portion of or all of the uplink transmission parameters in the third transmission parameter set and the first transmission parameter set are different, or parameter values of a portion of the uplink transmission parameters in the third transmission parameter set and the first transmission parameter set are different and types of the uplink transmission parameters included in the third transmission parameter set and the first transmission parameter set are also different.

S503: The user equipment transmits the uplink data by using a quantity of second retransmissions when the time interval from the current moment to the latest moment at which the uplink timing information is received is greater than the first time interval, where the quantity of the first retransmissions is less than the quantity of the second retransmissions.

Correspondingly, the network device receives the uplink data from the user equipment by using the quantity of the second retransmissions when the time interval from the current moment to the latest moment at which the uplink timing information is received is greater than the first time interval.

After the timer 2 expires, in other words, when the time interval from the moment at which the user equipment performs uplink transmission to the latest moment at which the user equipment receives the uplink timing information is greater than the first time interval, the user equipment transmits the uplink data by using the quantity of the second retransmissions.

The transmission parameter included in the third transmission parameter set is different from the transmission parameter included in the second transmission parameter set. In other words, types of the transmission parameters of the third transmission parameter set and the transmission parameters of the second transmission parameter set may be different, or values of the transmission parameters of the third transmission parameter set and the transmission parameters of the second transmission parameter set are different, or values of a portion of a plurality of transmission parameters of the third transmission parameter set and a portion of a plurality of transmission parameters of the second transmission parameter set are different.

In a specific implementation, because the time interval from the current moment to the latest moment at which the user equipment receives the uplink timing information is less than or equal to the second time interval, and is not long from the moment at which the uplink timing information is delivered (where the uplink timing information is still valid or is just expired), a time offset of uplink transmission of the user equipment is relatively small, reliability of the uplink data transmission is relatively high, the user equipment may perform the uplink transmission by using the third transmission parameter set that can improve data transmission efficiency, and data transmission efficiency is relatively high.

Because the time interval from the current moment to the latest moment at which the user equipment receives the uplink timing information is greater than the second time interval and is less than or equal to the first time interval, and there is a period of time from the moment at which the uplink timing information is delivered, the time offset of the uplink transmission of the user equipment is relatively large before the timer 1 expires, and the user equipment may transmit the uplink data by using the first transmission parameter set that balances both transmission efficiency and transmission reliability.

Because the time interval from the current moment to the latest moment at which the user equipment receives the uplink timing information is greater than the first time interval, and is relatively long from the moment at which the uplink timing information is delivered, the time offset of the uplink transmission of the user equipment is relatively large before the timer 2 expires, and the user equipment may transmit the uplink data by using the second transmission parameter set that can improve data transmission efficiency.

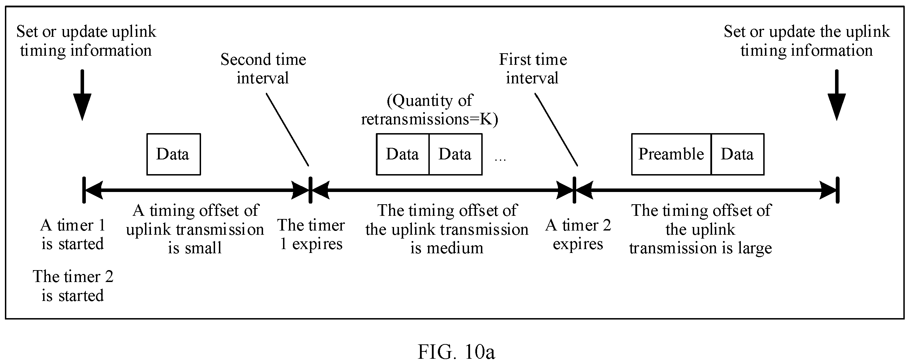

FIG. 10a is a schematic diagram of still another uplink transmission. In this figure, before a timer 1 expires or when the timer 1 expires, uplink transmission is performed by using a quantity of first retransmissions. After the timer 1 expires, and before a timer 2 expires or when the timer 2 expires, the uplink transmission is performed by using a second quantity K of retransmissions. The quantity of the second retransmissions is greater than the quantity of the first retransmissions. After the timer 2 expires, the uplink transmission is performed in a manner of sending a preamble and data. Compared with a quantity of retransmissions, sending the preamble can improve data transmission reliability.

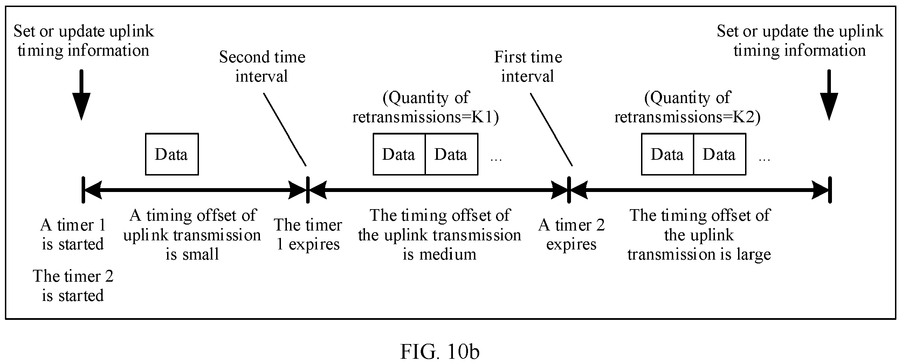

FIG. 10b is a schematic diagram of still another uplink transmission. In this figure, before a timer 1 expires or when the timer 1 expires, uplink transmission is performed by using a quantity of first retransmissions, and the quantity of the first retransmissions is 0. After the timer 1 expires, and before a timer 2 expires or when the timer 2 expires, the uplink transmission is performed by using a second quantity K1 of retransmissions, and the quantity of the second retransmissions is greater than the quantity of the first retransmissions. After the timer 2 expires, the uplink transmission is performed by using a quantity of third retransmissions, and the quantity of the third retransmissions is greater than the quantity of the second retransmissions.

Certainly, FIG. 10a and FIG. 10b are merely examples. Any combination of the first transmission parameter set, the second transmission parameter set, and the third transmission parameter set may be selected. This is not limited in this application.

According to the communication method provided in this embodiment of this application, in this implementation, different transmission parameters are used at different time intervals, so that both transmission efficiency and transmission reliability can be balanced.

The foregoing describes in detail the methods in the embodiments of the present invention, and the following provides apparatuses in the embodiments of the present invention.

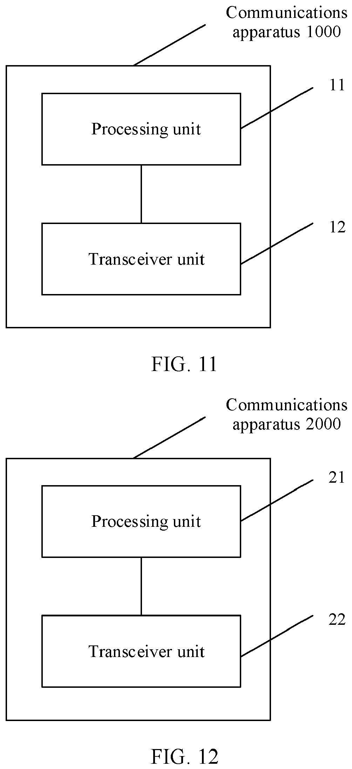

Based on a same concept as that of the communication methods in the foregoing embodiments, as shown in FIG. 11, an embodiment of this application further provides a communications apparatus 1000. The communications apparatus may be applied to the communication methods shown in FIG. 2 to FIG. 9. The communications apparatus 1000 may be the user equipment 200 shown in FIG. 1, or may be a component (for example, a chip) used in the user equipment 200. The communications apparatus 1000 includes a processing unit 11 and a transceiver unit 12.

The processing unit 11 is configured to start a timer.

The transceiver unit 12 is configured to transmit uplink data by using a first transmission parameter set when a time interval from a current moment to a latest moment at which uplink timing information is received is less than or equal to a first time interval.

The transceiver unit 12 is further configured to transmit uplink data by using a second transmission parameter set when a time interval from a current moment to a latest moment at which uplink timing information is received is greater than the first time interval.

A transmission parameter included in the first transmission parameter set is different from that included in the second transmission parameter set.

The processing unit 11 may be further configured to determine whether a timer expires at the current moment. If the timer does not expire at the current moment, the processing unit indicates the transceiver unit to transmit the uplink data by using the first transmission parameter set. If the timer expires at the current moment, the processing unit indicates the transceiver unit to transmit the uplink data by using the second transmission parameter set.

In an implementation, the transceiver unit 12 is configured to transmit the uplink data by using a quantity of first retransmissions when the time interval from the current moment to the latest moment at which the uplink timing information is received is less than or equal to the first time interval.

The transceiver unit 12 is further configured to transmit the uplink data by using a quantity of second retransmissions when the time interval from the current moment to the latest moment at which the uplink timing information is received is greater than the first time interval, where the quantity of the first retransmissions is less than the quantity of the second retransmissions.

In another implementation, the transceiver unit 12 is configured to transmit the uplink data by using the first transmission parameter set when the time interval from the current moment to the latest moment at which the uplink timing information is received is greater than a second time interval and is less than or equal to the first time interval, and the second time interval is less than the first time interval.

The transceiver unit 12 is further configured to transmit the uplink data by using a third transmission parameter set when the time interval from the current moment to the latest moment at which the uplink timing information is received is less than or equal to the second time interval, where a transmission parameter included in the third transmission parameter set is different from that included in the first transmission parameter set, and the transmission parameter included in the third transmission parameter set is different from that included in the second transmission parameter set.

In still another implementation, the transceiver unit 12 is configured to transmit the uplink data based on a quantity of third retransmissions when the time interval from the current moment to the latest moment at which the uplink timing information is received is less than or equal to the second time interval, where the quantity of the third retransmissions is less than the quantity of the first retransmissions.

In still another implementation, the transceiver unit 12 is configured to transmit the uplink data based on a first frame format when the time interval from the current moment to the latest moment at which the uplink timing information is received is less than or equal to the first time interval, where the first frame format does not include a preamble.

The transceiver unit 12 is configured to transmit the uplink data based on a second frame format when the time interval from the current moment to the latest moment at which the uplink timing information is received is greater than the first time interval, where the second frame format includes a preamble.

In still another implementation, the transceiver unit 12 is configured to transmit the uplink data by using a first transport block size when the time interval from the current moment to the latest moment at which the uplink timing information is received is less than or equal to the first time interval.

The transceiver unit 12 is configured to transmit the uplink data based on a second transport block size when the time interval from the current moment to the latest moment at which the uplink timing information is received is greater than the first time interval, where the second transport block size is smaller than the first transport block size.

For more detailed descriptions of the processing unit 11 and the transceiver unit 12, refer to related descriptions of the user equipment in the method embodiments shown in FIG. 2 to FIG. 9. Details are not described herein.

Based on a same concept as that of the communication methods in the foregoing embodiments, as shown in FIG. 12, an embodiment of this application further provides a communications apparatus 2000. The communications apparatus may be applied to the communication methods shown in FIG. 2 to FIG. 9. The communications apparatus 2000 may be the network device 100 shown in FIG. 1, or may be a component (for example, a chip) used in the network device 100. The communications apparatus 2000 includes a processing unit 21 and a transceiver unit 22.

The processing unit 21 is configured to start a timer.

The transceiver unit 22 is configured to receive uplink data from user equipment by using a first transmission parameter set when a time interval from a current moment to a latest moment at which uplink timing information is sent to the user equipment is less than or equal to a first time interval.

The transceiver unit 22 is further configured to receive the uplink data from the user equipment by using a second transmission parameter set when a time interval from a current moment to a latest moment at which uplink timing information is sent to the user equipment is greater than the first time interval.

A transmission parameter included in the first transmission parameter set is different from that included in the second transmission parameter set.

The processing unit 11 may be further configured to determine whether a timer expires at the current moment. If the timer does not expire at the current moment, the processing unit indicates the transceiver unit to receive, by using the first transmission parameter set, the uplink data transmitted by the user equipment. If the timer expires at the current moment, the processing unit indicates the transceiver unit to receive, by using the second transmission parameter set, the uplink data transmitted by the user equipment.

In an implementation, the transceiver unit 22 is configured to receive the uplink data from the user equipment based on a quantity of first retransmissions when the time interval from the current moment to the latest moment at which the uplink timing information is sent to the user equipment is less than or equal to the first time interval.

The transceiver unit 22 is further configured to receive the uplink data from the user equipment based on a quantity of second retransmissions when the time interval from the current moment to the latest moment at which the uplink timing information is sent to the user equipment is greater than the first time interval, where the quantity of the first retransmissions is less than the quantity of the second retransmissions.

In another implementation, the transceiver unit 22 is configured to receive the uplink data from the user equipment by using the first transmission parameter set when the time interval from the current moment to the latest moment at which the uplink timing information is sent to the user equipment is greater than a second time interval and is less than or equal to the first time interval, and the second time interval is less than the first time interval.

The transceiver unit 22 is further configured to receive the uplink data from the user equipment by using a third transmission parameter set when the time interval from the current moment to the latest moment at which the uplink timing information is sent to the user equipment is less than or equal to the second time interval, where a transmission parameter included in the third transmission parameter set is different from that included in the first transmission parameter set, and the transmission parameter included in the third transmission parameter set is different from that included in the second transmission parameter set.

In still another implementation, the transceiver unit 22 is further configured to receive the uplink data from the user equipment based on a quantity of third retransmissions when the time interval from the current moment to the latest moment at which the uplink timing information is sent to the user equipment is less than or equal to the second time interval, where the quantity of the third retransmissions is less than the quantity of the first retransmissions.

In still another implementation, the transceiver unit 22 is configured to receive the uplink data from the user equipment based on a first frame format when the time interval from the current moment to the latest moment at which the uplink timing information is sent to the user equipment is less than or equal to the first time interval, where the first frame format does not include a preamble.

The transceiver unit 22 is further configured to receive the uplink data from the user equipment based on a second frame format when the time interval from the current moment to the latest moment at which the uplink timing information is sent to the user equipment is greater than the first time interval, where the second frame format includes the preamble.

In still another implementation, the transceiver unit 22 is configured to receive the uplink data from the user equipment based on a first transport block size when the time interval from the current moment to the latest moment at which the uplink timing information is sent to the user equipment is less than or equal to the first time interval.

The transceiver unit 22 is further configured to receive the uplink data from the user equipment based on a second transport block size when the time interval from the current moment to the latest moment at which the uplink timing information is sent to the user equipment is greater than the first time interval, where the second transport block size is smaller than the first transport block size.

For more detailed descriptions of the processing unit 21 and the transceiver unit 22, refer to related descriptions of the network device in the method embodiments shown in FIG. 2 to FIG. 9. Details are not described herein.

An embodiment of this application further provides a communications apparatus. The communications apparatus is configured to perform the foregoing communication methods. Some or all of the foregoing communication methods may be implemented by using hardware, or may be implemented by using software.

Optionally, in a specific implementation, the communications apparatus may be a chip or an integrated circuit.

Optionally, when some or all of the communication methods in the foregoing embodiments are implemented by using software, the communications apparatus includes a memory configured to store a program and a processor configured to execute the program stored in the memory, so that when the program is executed, the communications apparatus is enabled to implement the communication methods provided in the foregoing embodiments.

Optionally, the memory may be a physically independent unit, or may be integrated with the processor.

Optionally, when some or all of the communication methods in the foregoing embodiments are implemented by using software, the communications apparatus may alternatively include only a processor. A memory configured to store a program is located outside the communications apparatus. The processor is connected to the memory by using a circuit or wire, and is configured to read and execute the program stored in the memory.

The processor may be a central processing unit (central processing unit, CPU), a network processor (network processor, NP), or a combination of a CPU and an NP.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

The memory may include a volatile memory (volatile memory), for example, a random-access memory (random-access memory, RAM). The memory may also include a nonvolatile memory (non-volatile memory), for example, a flash memory (flash memory), a hard disk drive (hard disk drive, HDD), or a solid-state drive (solid-state drive, SSD). The memory may further include a combination of the foregoing types of memories.

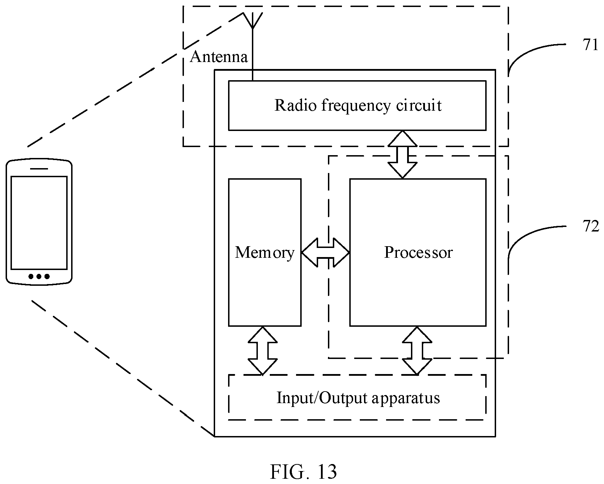

FIG. 13 is a simplified schematic structural diagram of user equipment. For ease of understanding and illustration, an example in which the user equipment is a mobile phone is used in FIG. 13. As shown in FIG. 13, the user equipment includes a processor, a memory, a radio frequency circuit, an antenna, and an input/output apparatus. The processor is mainly configured to: process a communication protocol and communication data, control the user equipment, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in an electromagnetic wave form. The input/output apparatus, such as a touchscreen, a display, or a keyboard, is mainly configured to: receive data entered by a user and output data to the user. It should be noted that some types of user equipments may not have an input/output apparatus.

When data needs to be sent, the processor performs baseband processing on the to-be-sent data, and outputs a baseband signal to the radio frequency circuit. After performing radio frequency processing on the baseband signal, the radio frequency circuit sends a radio frequency signal in the electromagnetic wave form through the antenna. When data is sent to the user equipment, the radio frequency circuit receives a radio frequency signal by using the antenna, converts the radio frequency signal into a baseband signal, and outputs the baseband signal to the processor, and the processor converts the baseband signal into data and processes the data. For ease of description, FIG. 13 shows only one memory and one processor. In an actual user equipment product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have transceiver functions may be considered as a receiving unit and a sending unit (which may also be collectively referred to as a transceiver unit) of the user equipment, and the processor having a processing function may be considered as a processing unit of the user equipment. As shown in FIG. 13, the user equipment includes a transceiver unit 71 and a processing unit 72. The transceiver unit 71 may also be referred to as a receiver/transmitter (transmitter) machine, a receiver/transmitter, a receiver/transmitter circuit, or the like. The processing unit 72 may also be referred to as a processor, a processing board, a processing module, a processing apparatus, or the like.

For example, in an embodiment, the transceiver unit 71 is configured to perform functions of the user equipment in steps S101 and S 102 in the embodiment shown in FIG. 2.

For another example, in another embodiment, the transceiver unit 71 is configured to perform functions of the user equipment in steps S201 and 5202 in the embodiment shown in FIG. 3.

For another example, in still another embodiment, the transceiver unit 71 is configured to perform functions of the user equipment in steps S301 and S302 in the embodiment shown in FIG. 5.

For another example, in still another embodiment, the transceiver unit 71 is configured to perform functions of the user equipment in steps S401 and S402 in the embodiment shown in FIG. 7.

For another example, in still another embodiment, the transceiver unit 71 is configured to perform functions of the user equipment in steps S501, S502, and S503 in the embodiment shown in FIG. 9.

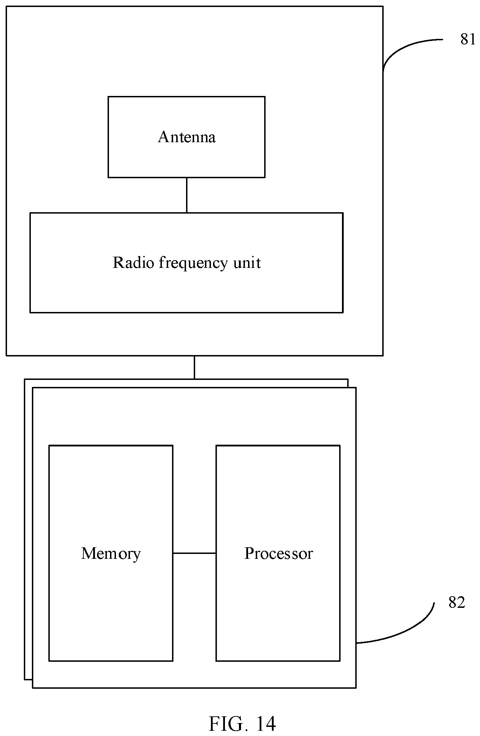

FIG. 14 is a simplified schematic structural diagram of a network device. The network device includes a part 82 and a part for radio frequency signal receiving/sending and conversion, and the radio frequency signal receiving/sending and conversion further includes a transceiver unit 81. The part for radio frequency signal receiving/sending and conversion is mainly configured to: send/receive a radio frequency signal and perform conversion between a radio frequency signal and a baseband signal. The part 82 is mainly configured to perform baseband processing, control the network device, and so on. The transceiver unit 81 may also be referred to as a receiver/transmitter (transmitter) machine, a receiver/transmitter, a receiver/transmitter circuit, or the like. The part 82 is usually a control center of the network device, and may usually be referred to as a processing unit, configured to control the network device to perform steps performed by the network device in FIG. 2 to FIG. 9. For details, refer to descriptions in the foregoing related parts.

The part 82 may include one or more boards. Each board may include one or more processors and one or more memories. The processor is configured to read and execute a program in the memory to implement a baseband processing function and control the network device. If there is a plurality of boards, the boards may be interconnected to improve a processing capability. In an optional implementation, alternatively, the plurality of boards may share one or more processors, or the plurality of boards share one or more memories, or the plurality of boards simultaneously share one or more processors.

For example, in an embodiment, the transceiver unit 81 is configured to perform functions of the network device in steps S101 and S 102 in the embodiment shown in FIG. 2.

For another example, in another embodiment, the transceiver unit 81 is configured to perform functions of the network device in steps S201 and 5202 in the embodiment shown in FIG. 3.

For another example, in still another embodiment, the transceiver unit 81 is configured to perform functions of the network device in steps S301 and S302 in the embodiment shown in FIG. 5.

For another example, in still another embodiment, the transceiver unit 81 is configured to perform functions of the network device in steps S401 and S402 in the embodiment shown in FIG. 7.

For another example, in still another embodiment, the transceiver unit 81 is configured to perform functions of the network device in steps S501, S502, and S503 in the embodiment shown in FIG. 9.

An embodiment of this application further provides a computer-readable storage medium. The computer-readable storage medium stores a computer program or an instruction. When the computer program or the instruction is executed, the methods according to the foregoing aspects are implemented.

An embodiment of this application further provides a computer program product including an instruction. When the instruction is run on a computer, the computer is enabled to perform the methods according to the foregoing aspects.

An embodiment of this application further provides a communications system, including the foregoing communications apparatuses.

It may be clearly understood by a person skilled in the art that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, division into the units is merely logical function division and may be other division in an actual implementation. For example, a plurality of units or components may be combined or integrated into another system, or some features may be ignored or not performed. The displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

All or some of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or another programmable apparatus. The computer instruction may be stored in a computer-readable storage medium, or may be transmitted by using a computer-readable storage medium. The computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium such as a floppy disk, a hard disk, a magnetic tape, a magnetic disk, or an optical medium such as a digital versatile disc (digital versatile disc, DVD), or a semiconductor medium such as a solid-state drive (solid state disk, SSD).

## Claims

1. A communication method, comprising:
receiving(S101) uplink data from user equipment by using a first transmission parameter set when a time interval from a current moment to a latest moment at which uplink timing information is sent to the user equipment is less than or equal to a first time interval; or
receiving (S102) uplink data from user equipment by using a second transmission parameter set when a time interval from a current moment to a latest moment at which uplink timing information is sent to the user equipment is greater than the first time interval, wherein
a transmission parameter comprised in the first transmission parameter set is different from that comprised in the second transmission parameter set, and wherein the receiving uplink data from user equipment by using a first transmission parameter set comprises: receiving (S201) the uplink data from the user equipment based on a quantity of first retransmissions; or
the receiving (S202) uplink data from user equipment by using a second transmission parameter set comprises: receiving the uplink data from the user equipment based on a quantity of second retransmissions, wherein the quantity of the first retransmissions is less than the quantity of the second retransmissions.

2. The method according to claim 1, wherein when the time interval from the current moment to the latest moment at which the uplink timing information is sent to the user equipment is greater than a second time interval and is less than or equal to the first time interval, the first transmission parameter set is used to receive the uplink data from the user equipment, and the second time interval is less than the first time interval; and
the method further comprises:
receiving the uplink data from the user equipment by using a third transmission parameter set when the time interval from the current moment to the latest moment at which the uplink timing information is sent to the user equipment is less than or equal to the second time interval, wherein a transmission parameter comprised in the third transmission parameter set is different from that comprised in the first transmission parameter set, and the transmission parameter comprised in the third transmission parameter set is different from that comprised in the second transmission parameter set.

3. The method according to claim 2, wherein the receiving the uplink data from the user equipment by using a third transmission parameter set comprises: receiving the uplink data from the user equipment based on a quantity of third retransmissions, wherein the quantity of the third retransmissions is less than the quantity of the first retransmissions.

4. The method according to any one of claims 1 to 3, wherein the receiving uplink data from user equipment by using a first transmission parameter set comprises: receiving the uplink data from the user equipment based on a first frame format, wherein the first frame format does not comprise a preamble; or
the receiving uplink data from user equipment by using a second transmission parameter set comprises: receiving the uplink data from the user equipment based on a second frame format, wherein the second frame format comprises a preamble.

5. The method according to any one of claims 1 to 4, wherein the receiving uplink data from user equipment by using a first transmission parameter set comprises: receiving the uplink data from the user equipment based on a first transport block size; or
the receiving uplink data from user equipment by using a second transmission parameter set comprises: receiving the uplink data from the user equipment based on a second transport block size, wherein the second transport block size is smaller than the first transport block size.

6. A communications apparatus (1000), comprising:
a transceiver unit (12), configured to transmit uplink data by using a first transmission parameter set when a time interval from a current moment to a latest moment at which uplink timing information is received is less than or equal to a first time interval, wherein
the transceiver unit is further configured to transmit uplink data by using a second transmission parameter set when a time interval from a current moment to a latest moment at which uplink timing information is received is greater than the first time interval, wherein
a transmission parameter comprised in the first transmission parameter set is different from that comprised in the second transmission parameter set, and
wherein the transceiver unit is configured to transmit the uplink data by using a quantity of first retransmissions when the time interval from the current moment to the latest moment at which the uplink timing information is received is less than or equal to the first time interval; or
the transceiver unit is further configured to transmit the uplink data by using a quantity of second retransmissions when the time interval from the current moment to the latest moment at which the uplink timing information is received is greater than the first time interval, wherein the quantity of the first retransmissions is less than the quantity of the second retransmissions.

7. The communications apparatus according to claim 6, wherein the transceiver unit is configured to transmit the uplink data by using the first transmission parameter set when the time interval from the current moment to the latest moment at which the uplink timing information is received is greater than a second time interval and is less than or equal to the first time interval, and the second time interval is less than the first time interval; or
the transceiver unit is further configured to transmit the uplink data by using a third transmission parameter set when the time interval from the current moment to the latest moment at which the uplink timing information is received is less than or equal to the second time interval, wherein a transmission parameter comprised in the third transmission parameter set is different from that comprised in the first transmission parameter set, and the transmission parameter comprised in the third transmission parameter set is different from that comprised in the second transmission parameter set.

8. The communications apparatus according to claim 7, wherein the transceiver unit is configured to transmit the uplink data based on a quantity of third retransmissions when the time interval from the current moment to the latest moment at which the uplink timing information is received is less than or equal to the second time interval, wherein the quantity of the third retransmissions is less than the quantity of the first retransmissions.

9. The communications apparatus according to any one of claims 6 to 8, wherein the transceiver unit is configured to transmit the uplink data based on a first frame format when the time interval from the current moment to the latest moment at which the uplink timing information is received is less than or equal to the first time interval, wherein the first frame format does not comprise a preamble; or
the transceiver unit is configured to transmit the uplink data based on a second frame format when the time interval from the current moment to the latest moment at which the uplink timing information is received is greater than the first time interval, wherein the second frame format comprises a preamble.

10. The communications apparatus according to any one of claims 6 to 9, wherein the transceiver unit is configured to transmit the uplink data based on a first transport block size when the time interval from the current moment to the latest moment at which the uplink timing information is received is less than or equal to the first time interval; or
the transceiver unit is configured to transmit the uplink data based on a second transport block size when the time interval from the current moment to the latest moment at which the uplink timing information is received is greater than the first time interval, wherein the second transport block size is smaller than the first transport block size.

11. A communications apparatus (2000) comprising:
a transceiver unit (21), configured to receive uplink data from user equipment by using a first transmission parameter set when a time interval from a current moment to a latest moment at which uplink timing information is sent to the user equipment is less than or equal to a first time interval, wherein
the transceiver unit is further configured to receive uplink data from user equipment by using a second transmission parameter set when a time interval from a current moment to a latest moment at which uplink timing information is sent to the user equipment is greater than the first time interval, wherein
a transmission parameter comprised in the first transmission parameter set is different from that comprised in the second transmission parameter set, and
wherein the transceiver unit is configured to receive the uplink data from the user equipment based on a quantity of first retransmissions when the time interval from the current moment to the latest moment at which the uplink timing information is sent to the user equipment is less than or equal to the first time interval; or
the transceiver unit is further configured to receive the uplink data from the user equipment based on a quantity of second retransmissions when the time interval from the current moment to the latest moment at which the uplink timing information is sent to the user equipment is greater than the first time interval, wherein the quantity of the first retransmissions is less than the quantity of the second retransmissions.

12. The communications apparatus according to claim 11, wherein the transceiver unit is configured to receive the uplink data from the user equipment by using the first transmission parameter set when the time interval from the current moment to the latest moment at which the uplink timing information is sent to the user equipment is greater than a second time interval and is less than the first time interval, and the second time interval is less than the first time interval; or
the transceiver unit is further configured to receive the uplink data from the user equipment by using a third transmission parameter set when the time interval from the current moment to the latest moment at which the uplink timing information is sent to the user equipment is less than or equal to the second time interval, wherein a transmission parameter comprised in the third transmission parameter set is different from that comprised in the first transmission parameter set, and the transmission parameter comprised in the third transmission parameter set is different from that comprised in the second transmission parameter set.

## Patentansprüche

1. Kommunikationsverfahren, das Folgendes umfasst:
Empfangen (S101) von Uplink-Daten von einer Benutzereinrichtung unter Verwendung eines ersten Übertragungsparametersatzes, wenn ein Zeitintervall von einem aktuellen Zeitpunkt bis zu einem spätesten Zeitpunkt, zu dem Uplink-Zeitinformationen an die Benutzereinrichtung gesendet werden, kleiner oder gleich einem ersten Zeitintervall ist; oder
Empfangen (S102) von Uplink-Daten von einer Benutzereinrichtung unter Verwendung eines zweiten Übertragungsparametersatzes, wenn ein Zeitintervall von einem aktuellen Zeitpunkt bis zu einem spätesten Zeitpunkt, zu dem Uplink-Zeitinformationen an die Benutzereinrichtung gesendet werden, größer ist als das erste Zeitintervall, wobei
ein im ersten Übertragungsparametersatz enthaltener Übertragungsparameter sich von dem im zweiten Übertragungsparametersatz enthaltenen unterscheidet, und
wobei der Empfang von Uplink-Daten von einer Benutzereinrichtung unter Verwendung eines ersten Übertragungsparametersatzes Folgendes umfasst:
Empfangen (S201) der Uplink-Daten von der Benutzereinrichtung auf der Grundlage einer Anzahl von ersten Neuübertragungen; oder
das Empfangen (S202) von Uplink-Daten von einer Benutzereinrichtung unter Verwendung eines zweiten Übertragungsparametersatzes umfasst Folgendes:
Empfangen der Uplink-Daten von der Benutzereinrichtung auf der Grundlage einer Anzahl von zweiten Neuübertragungen,
wobei die Anzahl der ersten Neuübertragungen geringer ist als die Anzahl der zweiten Neuübertragungen.

2. Verfahren nach Anspruch 1, wobei, wenn das Zeitintervall von einem aktuellen Zeitpunkt bis zu einem spätesten Zeitpunkt, zu dem die Uplink-Zeitinformationen an die Benutzereinrichtung gesendet werden, größer als ein zweites Zeitintervall und kleiner oder gleich dem ersten Zeitintervall ist, der erste Übertragungsparametersatz verwendet wird, um die Uplink-Daten von der Benutzereinrichtung zu empfangen, und das zweite Zeitintervall kleiner als das erste Zeitintervall ist; und
wobei das Verfahren ferner Folgendes umfasst:
Empfangen der Uplink-Daten von der Benutzereinrichtung unter Verwendung eines dritten Übertragungsparametersatzes, wenn das Zeitintervall von dem aktuellen Zeitpunkt bis zu dem spätesten Zeitpunkt, zu dem die Uplink-Zeitinformationen an die Benutzereinrichtung gesendet werden, kleiner oder gleich dem zweiten Zeitintervall ist,
wobei ein Übertragungsparameter, der in dem dritten Übertragungsparametersatz enthalten ist, sich von demjenigen unterscheidet, der in dem ersten Übertragungsparametersatz enthalten ist, und der Übertragungsparameter, der in dem dritten Übertragungsparametersatz enthalten ist, sich von demjenigen unterscheidet, der in dem zweiten Übertragungsparametersatz enthalten ist.

3. Verfahren nach Anspruch 2, wobei das Empfangen der Uplink-Daten von der Benutzereinrichtung unter Verwendung eines dritten Übertragungsparametersatzes Folgendes umfasst:
Empfangen der Uplink-Daten von der Benutzereinrichtung auf der Grundlage einer Anzahl von dritten Neuübertragungen,
wobei die Anzahl der dritten Neuübertragungen geringer ist als die Anzahl der ersten Neuübertragungen.

4. Verfahren nach einem der Ansprüche 1 bis 3, wobei das Empfangen von Uplink-Daten von einer Benutzereinrichtung unter Verwendung eines ersten Übertragungsparametersatzes Folgendes umfasst:
Empfangen der Uplink-Daten von der Benutzereinrichtung auf der Grundlage eines ersten Rahmenformats,
wobei das erste Rahmenformat keine Präambel enthält; oder
das Empfangen von Uplink-Daten von der Benutzereinrichtung unter Verwendung eines zweiten Übertragungsparametersatzes Folgendes umfasst:
Empfangen der Uplink-Daten von der Benutzereinrichtung auf der Grundlage eines zweiten Rahmenformats,
wobei das zweite Rahmenformat eine Präambel umfasst.

5. Verfahren nach einem der Ansprüche 1 bis 4, wobei das Empfangen von Uplink-Daten von einer Benutzereinrichtung unter Verwendung eines ersten Übertragungsparametersatzes Folgendes umfasst:
Empfangen der Uplink-Daten von der Benutzereinrichtung basierend auf einer ersten Transportblockgröße; oder
das Empfangen von Uplink-Daten von der Benutzereinrichtung unter Verwendung eines zweiten Übertragungsparametersatzes Folgendes umfasst:
Empfangen der Uplink-Daten von der Benutzereinrichtung auf der Grundlage einer zweiten Transportblockgröße,
wobei die zweite Transportblockgröße kleiner ist als die erste Transportblockgröße.

6. Kommunikationsvorrichtung (1000), die Folgendes umfasst:
eine Transceiver-Einheit (12), die so konfiguriert ist, dass sie Uplink-Daten unter Verwendung eines ersten Übertragungsparametersatzes sendet, wenn ein Zeitintervall von einem aktuellen Zeitpunkt bis zu einem spätesten Zeitpunkt, zu dem Uplink-Zeitinformationen empfangen werden, kleiner oder gleich einem ersten Zeitintervall ist, wobei
die Transceiver-Einheit ferner so konfiguriert ist, dass sie Uplink-Daten unter Verwendung eines zweiten Übertragungsparametersatzes überträgt, wenn ein Zeitintervall von einem aktuellen Zeitpunkt bis zu einem spätesten Zeitpunkt, zu dem Uplink-Zeitinformationen empfangen werden, größer ist als das erste Zeitintervall, wobei
ein im ersten Übertragungsparametersatz enthaltener Übertragungsparameter sich von dem im zweiten Übertragungsparametersatz enthaltenen unterscheidet, und
wobei die Transceiver-Einheit so konfiguriert ist, dass sie die Uplink-Daten unter Verwendung einer Anzahl von ersten Neuübertragungen überträgt, wenn das Zeitintervall von dem aktuellen Zeitpunkt bis zu dem spätesten Zeitpunkt, zu dem die Uplink-Zeitinformationen empfangen werden, kleiner oder gleich dem ersten Zeitintervall ist; oder
die Transceiver-Einheit ferner so konfiguriert ist, dass sie die Uplink-Daten unter Verwendung einer Anzahl von zweiten Neuübertragungen überträgt, wenn das Zeitintervall von dem aktuellen Zeitpunkt bis zu dem spätesten Zeitpunkt, zu dem die Uplink-Zeitinformationen empfangen werden, größer ist als das erste Zeitintervall,
wobei die Anzahl der ersten Neuübertragungen geringer ist als die Anzahl der zweiten Neuübertragungen.

7. Kommunikationsvorrichtung nach Anspruch 6, wobei die Transceiver-Einheit so konfiguriert ist, dass sie die Uplink-Daten unter Verwendung des ersten Übertragungsparametersatzes sendet, wenn das Zeitintervall von dem aktuellen Zeitpunkt bis zu dem spätesten Zeitpunkt, zu dem die Uplink-Zeitinformationen empfangen werden, größer als ein zweites Zeitintervall ist und kleiner oder gleich dem ersten Zeitintervall ist, und das zweite Zeitintervall kleiner als das erste Zeitintervall ist; oder
die Transceiver-Einheit ferner so konfiguriert ist, dass sie die Uplink-Daten unter Verwendung eines dritten Übertragungsparametersatzes sendet, wenn das Zeitintervall von dem aktuellen Zeitpunkt bis zu dem spätesten Zeitpunkt, zu dem die Uplink-Zeitinformationen empfangen werden, kleiner oder gleich dem zweiten Zeitintervall ist,
wobei ein Übertragungsparameter, der in dem dritten Übertragungsparametersatz enthalten ist, sich von demjenigen unterscheidet, der in dem ersten Übertragungsparametersatz enthalten ist, und der Übertragungsparameter, der in dem dritten Übertragungsparametersatz enthalten ist, sich von demjenigen unterscheidet, der in dem zweiten Übertragungsparametersatz enthalten ist.

8. Kommunikationsvorrichtung nach Anspruch 7, wobei die Transceiver-Einheit so konfiguriert ist, dass sie die Uplink-Daten auf der Grundlage einer Anzahl dritter Neuübertragungen überträgt, wenn das Zeitintervall von dem aktuellen Zeitpunkt bis zu dem spätesten Zeitpunkt, zu dem die Uplink-Zeitinformationen empfangen werden, kleiner oder gleich dem zweiten Zeitintervall ist,
wobei die Anzahl der dritten Neuübertragungen geringer ist als die Anzahl der ersten Neuübertragungen.

9. Kommunikationsvorrichtung nach einem der Ansprüche 6 bis 8, wobei die Transceiver-Einheit so konfiguriert ist, dass sie die Uplink-Daten auf der Grundlage eines ersten Rahmenformats sendet, wenn das Zeitintervall von dem aktuellen Zeitpunkt bis zu dem spätesten Zeitpunkt, zu dem die Uplink-Zeitinformationen empfangen werden, kleiner oder gleich dem ersten Zeitintervall ist,
wobei das erste Rahmenformat keine Präambel enthält; oder
die Transceiver-Einheit so konfiguriert ist, dass sie die Uplink-Daten auf der Grundlage eines zweiten Rahmenformats sendet, wenn das Zeitintervall von dem aktuellen Zeitpunkt bis zu dem spätesten Zeitpunkt, zu dem die Uplink-Zeitinformationen empfangen werden, größer ist als das erste Zeitintervall,
wobei das zweite Rahmenformat eine Präambel umfasst.

10. Kommunikationsvorrichtung nach einem der Ansprüche 6 bis 9, wobei die Transceiver-Einheit so konfiguriert ist, dass sie die Uplink-Daten auf der Grundlage einer ersten Transportblockgröße sendet, wenn das Zeitintervall von dem aktuellen Zeitpunkt bis zu dem spätesten Zeitpunkt, zu dem die Uplink-Zeitinformationen empfangen werden, kleiner oder gleich dem ersten Zeitintervall ist; oder
die Transceiver-Einheit so konfiguriert ist, dass sie die Uplink-Daten auf der Grundlage einer zweiten Transportblockgröße sendet, wenn das Zeitintervall von dem aktuellen Zeitpunkt bis zu dem spätesten Zeitpunkt, zu dem die Uplink-Zeitinformationen empfangen werden, größer ist als das erste Zeitintervall,
wobei die zweite Transportblockgröße kleiner ist als die erste Transportblockgröße.

11. Kommunikationsvorrichtung (2000), die Folgendes umfasst:
eine Transceiver-Einheit (21), die so konfiguriert ist, dass sie Uplink-Daten von einer Benutzereinrichtung unter Verwendung eines ersten Übertragungsparametersatzes empfängt, wenn ein Zeitintervall von einem aktuellen Zeitpunkt bis zu einem spätesten Zeitpunkt, zu dem Uplink-Zeitinformationen an die Benutzereinrichtung gesendet werden, kleiner oder gleich einem ersten Zeitintervall ist, wobei
die Transceiver-Einheit ferner so konfiguriert ist, dass sie Uplink-Daten von einer Benutzereinrichtung unter Verwendung eines zweiten Übertragungsparametersatzes empfängt, wenn ein Zeitintervall von einem aktuellen Zeitpunkt bis zu einem spätesten Zeitpunkt, zu dem Uplink-Zeitinformationen an die Benutzereinrichtung gesendet werden, größer ist als das erste Zeitintervall, wobei
ein im ersten Übertragungsparametersatz enthaltener Übertragungsparameter sich von dem im zweiten Übertragungsparametersatz enthaltenen unterscheidet, und
wobei die Transceiver-Einheit so konfiguriert ist, dass sie die Uplink-Daten von der Benutzereinrichtung auf der Grundlage einer Menge von ersten Neuübertragungen empfängt, wenn das Zeitintervall von dem aktuellen Zeitpunkt bis zu dem spätesten Zeitpunkt, zu dem die Uplink-Zeitinformationen an die Benutzereinrichtung gesendet werden, kleiner oder gleich dem ersten Zeitintervall ist; oder
die Transceiver-Einheit ferner so konfiguriert ist, dass sie die Uplink-Daten von der Benutzereinrichtung auf der Grundlage einer Menge von zweiten Neuübertragungen empfängt, wenn das Zeitintervall von dem aktuellen Zeitpunkt bis zu dem spätesten Zeitpunkt, zu dem die Uplink-Zeitinformationen an die Benutzereinrichtung gesendet werden, größer ist als das erste Zeitintervall,
wobei die Anzahl der ersten Neuübertragungen geringer ist als die Anzahl der zweiten Neuübertragungen.

12. Kommunikationsvorrichtung nach Anspruch 11, wobei die Transceiver-Einheit so konfiguriert ist, dass sie die Uplink-Daten von der Benutzereinrichtung unter Verwendung des ersten Übertragungsparametersatzes empfängt, wenn das Zeitintervall von dem aktuellen Zeitpunkt bis zu dem spätesten Zeitpunkt, zu dem die Uplink-Zeitinformationen an die Benutzereinrichtung gesendet werden, größer als ein zweites Zeitintervall und kleiner als das erste Zeitintervall ist, und das zweite Zeitintervall kleiner als das erste Zeitintervall ist; oder
die Transceiver-Einheit ferner so konfiguriert ist, dass sie die Uplink-Daten von der Benutzereinrichtung unter Verwendung eines dritten Übertragungsparametersatzes empfängt, wenn das Zeitintervall von dem aktuellen Zeitpunkt bis zu dem spätesten Zeitpunkt, zu dem die Uplink-Zeitinformationen an die Benutzereinrichtung gesendet werden, kleiner oder gleich dem zweiten Zeitintervall ist,
wobei ein Übertragungsparameter, der in dem dritten Übertragungsparametersatz enthalten ist, sich von demjenigen unterscheidet, der in dem ersten Übertragungsparametersatz enthalten ist, und der Übertragungsparameter, der in dem dritten Übertragungsparametersatz enthalten ist, sich von demjenigen unterscheidet, der in dem zweiten Übertragungsparametersatz enthalten ist.

## Revendications

1. Procédé de communication, comportant l'étape consistant à :
recevoir (S101) des données de liaison montante provenant d'un équipement d'utilisateur en utilisant un premier ensemble de paramètres de transmission lorsqu'un intervalle de temps d'un instant actuel à un instant le plus récent où des informations de rythme de liaison montante sont envoyées à l'équipement d'utilisateur est inférieur ou égal à un premier intervalle de temps ; ou
recevoir (S102) des données de liaison montante provenant d'un équipement d'utilisateur en utilisant un deuxième ensemble de paramètres de transmission lorsqu'un intervalle de temps d'un instant actuel à un instant le plus récent où des informations de rythme de liaison montante sont envoyées à l'équipement d'utilisateur est supérieur au premier intervalle de temps,
un paramètre de transmission compris dans le premier ensemble de paramètres de transmission étant différent de celui compris dans le deuxième ensemble de paramètres de transmission, et
la réception de données de liaison montante provenant d'un équipement d'utilisateur en utilisant un premier ensemble de paramètres de transmission comportant : la réception (S201) des données de liaison montante provenant de l'équipement d'utilisateur d'après une quantité de premières retransmissions ; ou
la réception (S202) de données de liaison montante provenant d'un équipement d'utilisateur en utilisant un deuxième ensemble de paramètres de transmission comportant : la réception des données de liaison montante provenant de l'équipement d'utilisateur d'après une quantité de deuxièmes retransmissions, la quantité des premières retransmissions étant inférieure à la quantité des deuxièmes retransmissions.

2. Procédé selon la revendication 1, lorsque l'intervalle de temps de l'instant actuel à l'instant le plus récent où les informations de rythme de liaison montante sont envoyées à l'équipement d'utilisateur est supérieur à un deuxième intervalle de temps et est inférieur ou égal au premier intervalle de temps, le premier ensemble de paramètres de transmission étant utilisé pour recevoir les données de liaison montante provenant de l'équipement d'utilisateur, et le deuxième intervalle de temps étant inférieur au premier intervalle de temps ; et
le procédé comportant en outre l'étape consistant à :
recevoir les données de liaison montante provenant de l'équipement d'utilisateur en utilisant un troisième ensemble de paramètres de transmission lorsque l'intervalle de temps de l'instant actuel à l'instant le plus récent où les informations de rythme de liaison montante sont envoyées à l'équipement d'utilisateur est inférieur ou égal au deuxième intervalle de temps, un paramètre de transmission compris dans le troisième ensemble de paramètres de transmission étant différent de celui compris dans le premier ensemble de paramètres de transmission, et le paramètre de transmission compris dans le troisième ensemble de paramètres de transmission étant différent de celui compris dans le deuxième ensemble de paramètres de transmission.

3. Procédé selon la revendication 2, la réception des données de liaison montante provenant de l'équipement d'utilisateur en utilisant un troisième ensemble de paramètres de transmission comportant : la réception des données de liaison montante provenant de l'équipement d'utilisateur d'après une quantité de troisièmes retransmissions, la quantité des troisièmes retransmissions étant inférieure à la quantité des premières retransmissions.

4. Procédé selon l'une quelconque des revendications 1 à 3, la réception de données de liaison montante provenant d'un équipement d'utilisateur en utilisant un premier ensemble de paramètres de transmission comportant : la réception des données de liaison montante provenant de l'équipement d'utilisateur d'après un premier format de trame, le premier format de trame ne comportant pas de préambule ; ou
la réception de données de liaison montante provenant d'un équipement d'utilisateur en utilisant un deuxième ensemble de paramètres de transmission comportant : la réception des données de liaison montante provenant de l'équipement d'utilisateur d'après un deuxième format de trame, le deuxième format de trame comportant un préambule.

5. Procédé selon l'une quelconque des revendications 1 à 4, la réception de données de liaison montante provenant d'un équipement d'utilisateur en utilisant un premier ensemble de paramètres de transmission comportant : la réception des données de liaison montante provenant de l'équipement d'utilisateur d'après une première taille de blocs de transport ; ou
la réception de données de liaison montante provenant d'un équipement d'utilisateur en utilisant un deuxième ensemble de paramètres de transmission comportant : la réception des données de liaison montante provenant de l'équipement d'utilisateur d'après une deuxième taille de blocs de transport, la deuxième taille de blocs de transport étant plus petite que la première taille de blocs de transport.

6. Appareil (1000) de communications, comportant :
une unité (12) d'émetteur-récepteur, configurée pour émettre des données de liaison montante en utilisant un premier ensemble de paramètres de transmission lorsqu'un intervalle de temps d'un instant actuel à un instant le plus récent où des informations de rythme de liaison montante sont reçues est inférieur ou égal à un premier intervalle de temps,
l'unité d'émetteur-récepteur étant en outre configurée pour émettre des données de liaison montante en utilisant un deuxième ensemble de paramètres de transmission lorsqu'un intervalle de temps d'un instant actuel à un instant le plus récent où des informations de rythme de liaison montante sont reçues est supérieur au premier intervalle de temps,
un paramètre de transmission compris dans le premier ensemble de paramètres de transmission étant différent de celui compris dans le deuxième ensemble de paramètres de transmission, et
l'unité d'émetteur-récepteur étant configurée pour émettre les données de liaison montante en utilisant une quantité de premières retransmissions lorsque l'intervalle de temps de l'instant actuel à l'instant le plus récent où les informations de rythme de liaison montante sont reçues est inférieur ou égal au premier intervalle de temps ; ou
l'unité d'émetteur-récepteur étant en outre configurée pour émettre les données de liaison montante en utilisant une quantité de deuxièmes retransmissions lorsque l'intervalle de temps de l'instant actuel à l'instant le plus récent où les informations de rythme de liaison montante sont reçues est supérieur au premier intervalle de temps, la quantité des premières retransmissions étant inférieure à la quantité des deuxièmes retransmissions.

7. Appareil de communications selon la revendication 6, l'unité d'émetteur-récepteur étant configurée pour émettre les données de liaison montante en utilisant le premier ensemble de paramètres de transmission lorsque l'intervalle de temps de l'instant actuel à l'instant le plus récent où les informations de rythme de liaison montante sont reçues est supérieur à un deuxième intervalle de temps et est inférieur ou égal au premier intervalle de temps, et le deuxième intervalle de temps étant inférieur au premier intervalle de temps ; ou
l'unité d'émetteur-récepteur étant en outre configurée pour émettre les données de liaison montante en utilisant un troisième ensemble de paramètres de transmission lorsque l'intervalle de temps de l'instant actuel à l'instant le plus récent où les informations de rythme de liaison montante sont reçues est inférieur ou égal au deuxième intervalle de temps, un paramètre de transmission compris dans le troisième ensemble de paramètres de transmission étant différent de celui compris dans le premier ensemble de paramètres de transmission, et le paramètre de transmission compris dans le troisième ensemble de paramètres de transmission étant différent de celui compris dans le deuxième ensemble de paramètres de transmission.

8. Appareil de communications selon la revendication 7, l'unité d'émetteur-récepteur étant configurée pour émettre les données de liaison montante d'après une quantité de troisièmes retransmissions lorsque l'intervalle de temps de l'instant actuel à l'instant le plus récent où les informations de rythme de liaison montante sont reçues est inférieur ou égal au deuxième intervalle de temps, la quantité des troisièmes retransmissions étant inférieure à la quantité des premières retransmissions.

9. Appareil de communications selon l'une quelconque des revendications 6 à 8, l'unité d'émetteur-récepteur étant configurée pour émettre les données de liaison montante d'après un premier format de trame lorsque l'intervalle de temps de l'instant actuel à l'instant le plus récent où les informations de rythme de liaison montante sont reçues est inférieur ou égal au premier intervalle de temps, le premier format de trame ne comportant pas de préambule ; ou
l'unité d'émetteur-récepteur étant configurée pour émettre les données de liaison montante d'après un deuxième format de trame lorsque l'intervalle de temps de l'instant actuel à l'instant le plus récent où les informations de rythme de liaison montante sont reçues est supérieur au premier intervalle de temps, le deuxième format de trame comportant un préambule.

10. Appareil de communications selon l'une quelconque des revendications 6 à 9, l'unité d'émetteur-récepteur étant configurée pour émettre les données de liaison montante d'après une première taille de blocs de transport lorsque l'intervalle de temps de l'instant actuel à l'instant le plus récent où les informations de rythme de liaison montante sont reçues est inférieur ou égal au premier intervalle de temps ; ou
l'unité d'émetteur-récepteur étant configurée pour émettre les données de liaison montante d'après une deuxième taille de blocs de transport lorsque l'intervalle de temps de l'instant actuel à l'instant le plus récent où les informations de rythme de liaison montante sont reçues est supérieur au premier intervalle de temps, la deuxième taille de blocs de transport étant plus petite que la première taille de blocs de transport.

11. Appareil (2000) de communications comportant :
une unité (21) d'émetteur-récepteur, configurée pour recevoir des données de liaison montante provenant d'un équipement d'utilisateur en utilisant un premier ensemble de paramètres de transmission lorsqu'un intervalle de temps d'un instant actuel à un instant le plus récent où des informations de rythme de liaison montante sont envoyées à l'équipement d'utilisateur est inférieur ou égal à un premier intervalle de temps,
l'unité d'émetteur-récepteur étant en outre configurée pour recevoir des données de liaison montante provenant d'un équipement d'utilisateur en utilisant un deuxième ensemble de paramètres de transmission lorsqu'un intervalle de temps d'un instant actuel à un instant le plus récent où des informations de rythme de liaison montante sont envoyées à l'équipement d'utilisateur est supérieur au premier intervalle de temps,
un paramètre de transmission compris dans le premier ensemble de paramètres de transmission étant différent de celui compris dans le deuxième ensemble de paramètres de transmission, et
l'unité d'émetteur-récepteur étant configurée pour recevoir les données de liaison montante provenant de l'équipement d'utilisateur d'après une quantité de premières retransmissions lorsque l'intervalle de temps de l'instant actuel à l'instant le plus récent où les informations de rythme de liaison montante sont envoyées à l'équipement d'utilisateur est inférieur ou égal au premier intervalle de temps ; ou
l'unité d'émetteur-récepteur étant en outre configurée pour recevoir les données de liaison montante provenant de l'équipement d'utilisateur d'après une quantité de deuxièmes retransmissions lorsque l'intervalle de temps de l'instant actuel à l'instant le plus récent où les informations de rythme de liaison montante sont envoyées à l'équipement d'utilisateur est supérieur au premier intervalle de temps, la quantité des premières retransmissions étant inférieure à la quantité des deuxièmes retransmissions.

12. Appareil de communications selon la revendication 11, l'unité d'émetteur-récepteur étant configurée pour recevoir les données de liaison montante provenant de l'équipement d'utilisateur en utilisant le premier ensemble de paramètres de transmission lorsque l'intervalle de temps de l'instant actuel à l'instant le plus récent où les informations de rythme de liaison montante sont envoyées à l'équipement d'utilisateur est supérieur à un deuxième intervalle de temps et est inférieur au premier intervalle de temps, et le deuxième intervalle de temps étant inférieur au premier intervalle de temps ; ou
l'unité d'émetteur-récepteur étant en outre configurée pour recevoir les données de liaison montante provenant de l'équipement d'utilisateur en utilisant un troisième ensemble de paramètres de transmission lorsque l'intervalle de temps de l'instant actuel à l'instant le plus récent où les informations de rythme de liaison montante sont envoyées à l'équipement d'utilisateur est inférieur ou égal au deuxième intervalle de temps, un paramètre de transmission compris dans le troisième ensemble de paramètres de transmission étant différent de celui compris dans le premier ensemble de paramètres de transmission, et le paramètre de transmission compris dans le troisième ensemble de paramètres de transmission étant différent de celui compris dans le deuxième ensemble de paramètres de transmission.
